(19) Europäisches Patentamt
European Patent Office
Office européen des brevets

(11) **EP 4 538 882 A1**

(12) **EUROPEAN PATENT APPLICATION**
published in accordance with Art. 153(4) EPC

(43) Date of publication:
**16.04.2025 Bulletin 2025/16**

(21) Application number: **23834519.3**

(22) Date of filing: **17.05.2023**

(51) International Patent Classification (IPC):
***G06F 9/50*** (2006.01)

(52) Cooperative Patent Classification (CPC):
**G06F 9/50**

(86) International application number:
**PCT/CN2023/094808**

(87) International publication number:
**WO 2024/007745 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.07.2022 CN 202210806780**

(71) Applicant: **Huawei Technologies Co., Ltd.
Shenzhen, Guangdong 518129 (CN)**

(72) Inventors:
• **CHEN, Geng**
**Shenzhen, Guangdong 518129 (CN)**
• **FU, Ming**
**Shenzhen, Guangdong 518129 (CN)**
• **LEI, Jitang**
**Shenzhen, Guangdong 518129 (CN)**
• **WANG, Jiawei**
**Shenzhen, Guangdong 518129 (CN)**

(74) Representative: **Epping - Hermann - Fischer
Patentanwaltsgesellschaft mbH
Schloßschmidstraße 5
80639 München (DE)**

(54) **DATA WRITING METHOD AND APPARATUS, DATA READING METHOD AND APPARATUS, ELECTRONIC DEVICE, AND STORAGE MEDIUM**

(57) This application provides a data writing method, a data reading method, an apparatus, an electronic device, and a storage medium. The data writing method includes: determining first data to be written into a circular storage queue; obtaining a global write pointer of the circular storage queue, where the circular storage queue includes a plurality of storage areas, each storage area includes a plurality of subareas, and the global write pointer points to a first storage area of the plurality of storage areas; obtaining a first write pointer of the first storage area, and determining a size of allocated space in the first storage area based on the first write pointer of the first storage area; if it is determined that the size of the allocated space in the first storage area is less than a size of space of the first storage area, performing an FAA operation on the first storage area, to allocate a first subarea in the first storage area; and writing the first data into the first subarea. This method can improve system performance and reduce a cache miss rate.

FIG. 5

EP 4 538 882 A1

## Description

This application claims priority to Chinese Patent Application No. 202210806780.3, filed with the China National Intellectual Property Administration on July 8, 2022 and entitled "DATA WRITING METHOD, DATA READING METHOD, APPARATUS, ELECTRONIC DEVICE, AND STORAGE MEDIUM", which is incorporated herein by reference in its entirety.

## TECHNICAL FIELD

This application relates to the field of data storage technologies, and in particular, to a data writing method, a data reading method, an apparatus, an electronic device, and a storage medium.

## BACKGROUND

In an operating system, a circular storage queue is a special first in first out (first in first out, FIFO) queue. The circular storage queue connects a last location in storage space to a first location to form logical ring space. As a general data structure, the circular storage queue is widely used in scenarios such as sending and receiving data packets in network communication and recording log data by a kernel profiling tool. For example, a lock-free circular storage queue is implemented in a data plane development kit (data plane development kit, DPDK) to implement data transmission between a network adapter and a kernel. In a Linux system tracing tool ftrace, a circular storage queue is also used to access log data.

An existing circular storage queue includes corresponding global metadata. The global metadata includes a global write pointer and a global read pointer. A thread may store data at a global write pointer location, and read data at a global read pointer location. In an existing data writing method, each thread needs to perform an in-order commit (commit) operation in sequence based on an allocation order after writing corresponding data into a circular storage queue. As a result, a plurality of threads that write data wait for each other. A similar mutual waiting operation also exists between a plurality of threads that read data, and the mutual waiting operation reduces system running efficiency. In addition, the threads share the global metadata. The global metadata needs to be read each time a read/write location is determined, and the global metadata needs to be updated each time a read/write operation is performed. As a result, bus preemption is high and a multi-core throughput rate is low.

## SUMMARY

Some implementations of this application provide a data writing method, a data reading method, an apparatus, an electronic device, and a storage medium.

The following describes this application from a plurality of aspects. Mutual reference may be made to implementations and beneficial effect of the following plurality of aspects.

According to a first aspect, an implementation of this application provides a data writing method, applied to an electronic device. The data writing method may be performed by a thread, an operating system, or an electronic device on which an operating system is installed. The method includes:

determining first data to be written into a circular storage queue;
obtaining a global write pointer of the circular storage queue, where the circular storage queue includes a plurality of storage areas, each storage area includes a plurality of subareas, and the global write pointer points to a first storage area of the plurality of storage areas;
obtaining a first write pointer of the first storage area, and determining a size of allocated space in the first storage area based on the first write pointer of the first storage area;
if it is determined that the size of the allocated space in the first storage area is less than a size of space of the first storage area, performing an FAA operation on the first storage area, to allocate a first subarea in the first storage area; and
writing the first data into the first subarea.

According to an implementation of this application, block management is performed on the circular queue, a writer location is allocated by using the global write pointer, and produced information (including local metadata related to a writer: the first write pointer allocated and the second write pointer committed) is locally collected in each storage area. The electronic device only needs to access the local metadata related to the writer in a storage area to determine a writable status of the storage area, and does not need to access local metadata and global metadata related to a reader, thereby reducing pressure on a system bus, reducing mutual competition interference between a reader and a writer, reducing cache miss (cache miss) caused by metadata update by the reader, and improving overall system performance. In addition, a data exchange operation is implemented by using an FAA instruction, the size of the allocated space is recorded, and a case in which the allocated space exceeds an upper bound does not need to be considered, thereby effectively reducing operation complexity, reducing system synchronization overheads, and improving system scalability.

In some implementations, the method further includes:

determining that the size of the allocated space in the first storage area is equal to the size of the space of the first storage area, and determining that a status of a second storage area is a writable state, where the second storage area is a next storage area adjacent to the first storage area; and

updating the global write pointer, so that the updated global write pointer points to the second storage area.

According to an implementation of this application, after determining that the first storage area has no storage space, the electronic device may determine, based on a status of a next storage area (that is, the second storage area) adjacent to the first storage area, whether to update the global write pointer.

In some implementations, the determining that a status of a second storage area is a writable state includes:

determining that the second storage area is in an unallocated state.

According to an implementation of this application, when the second storage area is not allocated, the electronic device determines that data can be directly written, and does not need to determine a previous-round read/write state in the second storage area.

In some implementations, the determining that a status of a second storage area is a writable state includes:

determining that a size of read space in the second storage area is equal to a size of space of the second storage area; and
determining that a quantity of read local read rewind times in the second storage area is equal to a quantity of global write rewind times, where
the quantity of global write rewind times is determined based on the global write pointer; and
the size of the read space in the second storage area and the quantity of read local read rewind times are determined based on a second read pointer of the second storage area, where the second read pointer of the second storage area is obtained when a current data write mode is a first mode.

According to an implementation of this application, in a case in which the current data write mode is the first mode, the electronic device cannot update the global write pointer when reading in the second storage area in a previous round is not completed. Otherwise, the data written in the previous round may be overwritten, causing data loss.

It should be understood that, in embodiments of this application, consumed information (including local metadata related to the reader: the first read pointer reserved and the second read pointer consumed) is further locally collected in each storage area. After the first storage area has been allocated, the electronic device may access local metadata related to the reader in the second storage area (that is, the next storage area), to determine whether reading in the second storage area in the previous round is completed, and update the global write pointer only when reading is completed. The global metadata does not need to be accessed. This reduces pressure on the system bus, improves overall system performance, reduces mutual competition interference between readers and between readers and writers, and ensures system reliability.

In addition, in embodiments of this application, whether reading in the storage area in the previous round is completed is determined by using a size of read space in the storage area, and determining is performed based on a dimension of the storage area. Therefore, in each storage area of the circular storage queue, out-of-order destruction (consume) by a reader does not affect determining of a status of whether reading in the storage area is completed, that is, out-of-order consume does not affect correctness of written data. Therefore, after reading data in each storage area of the circular storage queue, the thread may not need to wait for another thread to complete a consume operation, thereby avoiding mutual blocking between the readers, and improving a system throughput rate.

In some implementations, the determining that a status of a second storage area is a writable state includes:

determining that a size of written space in the second storage area is equal to a size of space of the second storage area; and
determining that a quantity of written local write rewind times in the second storage area is equal to a quantity of global write rewind times, where
the quantity of global write rewind times is determined based on the global write pointer; and
the size of the written space in the second storage area and the quantity of written local write rewind times are determined based on a second write pointer of the second storage area, where the second write pointer of the second storage area is obtained when a current data write mode is a second mode.

According to an implementation of this application. **In** a case in which the current data write mode is the second mode, the electronic device cannot update the global write pointer when writing in the second storage area in a previous round is not completed. Otherwise, two threads may write data to a same subarea at the same time, causing a system exception.

It should be understood that, in embodiments of this application, after the first storage area has been allocated, the electronic device may access local metadata related to the writer in the second storage area (that is, the next storage area), to determine whether writing in the second storage area in the previous round is completed, and update the global write pointer only when writing is completed. The global metadata does not need to be accessed. This reduces pressure on the system bus, reduces mutual competition interference between writers, and improves overall system performance.

According to a second aspect, an implementation of this application provides a data reading method, applied to an electronic device, where the method includes:

obtaining a global read pointer of a circular storage queue that stores to-be-read data, where the circular storage queue includes a plurality of storage areas, each storage area includes a plurality of subareas, and the global read pointer points to a third storage area of the plurality of storage areas;
obtaining a first write pointer and a second write pointer of the third storage area, determining a size of allocated space in the third storage area based on the first write pointer of the third storage area, and determining a size of written space in the third storage area based on the second write pointer of the third storage area;
if it is determined that the size of the written space in the third storage area is equal to the size of the allocated space in the third storage area, performing a MAX operation on the third storage area, to occupy a second subarea in the third storage area; and
reading second data stored in the second subarea.

According to an implementation of this application, the electronic device may determine a commit status of the third storage area based on the size of the written space in the third storage area and the size of the allocated space in the third storage area. The commit status includes complete commit and incomplete commit. Complete commit indicates that the size of the written space in the third storage area is equal to the size of the allocated space in the third storage area, and incomplete commit indicates that the size of the written space in the third storage area is less than the size of the allocated space in the third storage area. When determining that the commit status of the third storage area is complete commit, the electronic device occupies the second subarea in the third storage area by using a MAX instruction, and reads the second data in the second subarea. It should be understood that, in embodiments of this application, block management is performed on the circular queue, a reader location is allocated by using the global read pointer, and produced information (including local metadata related to a writer: a first write pointer allocated and a second write pointer committed) is locally collected in each storage area. The electronic device may access the local metadata related to the writer in the storage area to determine the commit status of the storage area, and read data only when the commit status of the storage area is complete commit, so that mutual competition interference between a reader and a writer can be reduced. In addition, in embodiments of this application, a size of written space in the storage area is used to determine the commit status of the storage area, and determining is performed based on a dimension of the storage area. Therefore, in each storage area of the circular storage queue, out-of-order commit of the writer does not affect determining of the commit status, that is, out-of-order commit does not affect correctness of read data. Therefore, after writing data into each storage area of the circular storage queue, the thread may not need to wait for another thread to complete a commit operation, thereby avoiding mutual blocking between the writers, and improving a system throughput rate.

In some implementations, before the performing a MAX operation on the third storage area, to occupy a second subarea in the third storage area, the method further includes:

determining that a size of occupied space in the third storage area is less than the size of the written space in the third storage area, where
the size of the occupied space in the third storage area is determined based on a first read pointer of the third storage area.

According to an implementation of this application, the electronic device may determine, based on the size of the occupied space in the third storage area and the size of the written space in the third storage area, whether written subspace in the third storage area is completely occupied. When the electronic device determines that the written subspace in the third storage area is already completely occupied, it represents that no unread data is written into the third storage area, and the electronic device cannot read the data. Therefore, the electronic device may not need to determine the commit status of the third storage area, thereby saving system processing resources.

It should be understood that, in embodiments of this application, consumed information (including local metadata reserved and consumed related to the reader) is further locally collected in each storage area. The electronic device only needs to access the local metadata related to the reader in the storage area to determine whether the storage area is completely occupied, and does not need to access the global metadata, thereby reducing pressure on a system bus, reducing mutual competition interference between a reader and a writer, and improving overall system performance. In some implementations, the performing a MAX operation on the third storage area, to occupy a second subarea in the third storage area includes:

adding 1 to the first read pointer of the third storage area by performing the MAX operation, and determining whether the first read pointer of the third storage area is updated by another thread; and
if the first read pointer of the third storage area is not updated by the another thread, occupying the second subarea in the third storage area.

It should be understood that a data exchange operation is implemented by using a MAX instruction, the size of the occupied space is recorded, and a case in which the allocated space exceeds an upper bound does not need to be considered, thereby effectively reducing operation complexity, reducing system synchronization overheads, and improving system scalability.

In some implementations, the reading second data stored in the second subarea includes:

if it is determined that a current data write mode is a second mode, and a quantity of allocated local write rewind times in the third storage area is equal to a quantity of occupied local read rewind times in the third storage area, reading and returning the second data stored in the second subarea, where
the quantity of allocated local write rewind times in the third storage area is determined based on the first write pointer of the third storage area, and the quantity of occupied local read rewind times in the third storage area is determined based on the first read pointer of the third storage area.

According to an implementation of this application, the electronic device may determine, based on the quantity of allocated local write rewind times in the third storage area and the quantity of occupied local read rewind times in the third storage area, whether to rewrite the second subarea. In a case in which the current data write mode is the second mode, when the electronic device determines that the second subarea is rewritten, it indicates that the data stored in the second subarea has changed and needs to be read again.

It should be understood that, in a case in which the current data write mode is the second mode, the electronic device only needs to access the local metadata related to the reader in the storage area to determine whether a subarea in a corresponding storage area is overwritten, and does not need to access the global metadata. This not only ensures that data read by the reader is data written in a latest round, but also reduces the pressure on the system bus and improves overall system performance.

In some implementations, the method further includes:

determining that the size of the occupied space in the third storage area is equal to a size of space of the third storage area, and determining that a status of a fourth storage area is a readable state, where the fourth storage area is a next storage area adjacent to the third storage area; and
updating the global read pointer, so that the updated global read pointer points to the fourth storage area.

According to an implementation of this application, the electronic device may determine, based on the size of the occupied space in the third storage area, whether the third storage area is completely occupied.

When determining that the third storage area is completely occupied, the electronic device may determine, based on a status of the next storage area (that is, the fourth storage area) adjacent to the third storage area, whether to update the global read pointer.

In some implementations, the determining that a status of a fourth storage area is a readable state includes:

determining that a quantity of written local write rewind times in the fourth storage area is equal to the quantity of global read rewind times plus 1, where the quantity of global read rewind times is determined based on the global read pointer; and
the quantity of written local write rewind times in the fourth storage area is determined based on a second write pointer of the fourth storage area, where the second write pointer of the fourth storage area is obtained when a current data write mode is a first mode.

According to an implementation of this application, the electronic device may determine, based on the quantity of written local write rewind times in the fourth storage area and the quantity of global read rewind times, whether a new round of data has been written into the fourth storage area. In a case in which the current data write mode is the first mode, when determining that the new round of data has been written to the fourth storage area, the electronic device determines that the status of the fourth storage area is the readable state, and updates the global read pointer. When the electronic device determines that no new round of data has been written into the fourth storage area, it indicates that no unread data has been written into the fourth storage area, and the electronic device cannot read the data. When the electronic device determines that more than one new round of data has been written into the fourth storage area, it indicates that an exception occurs in the system.

It should be understood that, when determining that the third storage area is completely occupied, the electronic device may access local metadata related to the reader in the fourth storage area (that is, the next storage area), to determine whether the new round of data has been written into the fourth storage area, and update the global read pointer only when the new round of data has been written, so that access to global metadata can be reduced. This reduces the pressure on the system bus, improves overall system performance, and ensures system reliability.

In some implementations, the determining that a status of a fourth storage area is a readable state includes:

determining that a quantity of written local write rewind times in the fourth storage area is greater than or equal to a sum of a quantity of occupied local read rewind times in the third storage area and a target increment, where

the quantity of written local write rewind times in the fourth storage area is determined based on a second write pointer of the fourth storage area, and the second write pointer of the fourth storage area is obtained when a current data write mode is a second mode; and

the quantity of occupied local read rewind times in the third storage area is determined based on the first read pointer of the third storage area, and a target increment value is determined based on a location of the third storage area.

According to an implementation of this application, the electronic device may determine, based on the quantity of written local write rewind times in the fourth storage area and the quantity of occupied local read rewind times in the third storage area, whether at least one new round of data has been written into the fourth storage area. In a case in which the current data write mode is the second mode, when determining that the at least one new round of data has been written to the fourth storage area, the electronic device determines that the status of the fourth storage area is the readable state, and updates the global read pointer. When the electronic device determines that no new round of data has been written into the fourth storage area, it indicates that no unread data has been written into the fourth storage area, and the electronic device cannot read the data.

It should be understood that, when determining that the third storage area is completely occupied, the electronic device may access local metadata related to the reader in the fourth storage area (that is, the next storage area), to determine whether the at least one new round of data has been written into the fourth storage area, and update the global read pointer only when the at least one new round of data has been written, so that access to global metadata can be reduced. This reduces the pressure on the system bus, improves overall system performance, and ensures system reliability. In some implementations, the method further includes:

performing a MAX operation on the fourth storage area, to set a quantity of occupied local read rewind times in the fourth storage area to the quantity of written local write rewind times in the fourth storage area.

According to a third aspect, an implementation of this application provides a data writing apparatus, disposed in an electronic device, where the apparatus includes:

a determining module, configured to determine first data to be written into a circular storage queue;

a first obtaining module, configured to obtain a global write pointer of the circular storage queue, where the circular storage queue includes a plurality of storage areas, each storage area includes a plurality of subareas, and the global write pointer points to a first storage area of the plurality of storage areas;

a second obtaining module, configured to obtain a first write pointer of the first storage area, and determine a size of allocated space in the first storage area based on the first write pointer of the first storage area;

an allocation module, configured to: if it is determined that the size of the allocated space in the first storage area is less than a size of space of the first storage area, perform an FAA operation on the first storage area, to allocate a first subarea in the first storage area; and

a writing module, configured to write the first data into the first subarea.

According to a fourth aspect, an implementation of this application provides a data reading apparatus, disposed in an electronic device, where the apparatus includes:

a third obtaining module, configured to obtain a global read pointer of a circular storage queue that stores to-be-read data, where the circular storage queue includes a plurality of storage areas, each storage area includes a plurality of subareas, and the global read pointer points to a third storage area of the plurality of storage areas;

a fourth obtaining module, configured to obtain a first write pointer and a second write pointer of the third storage area, determine a size of allocated space in the third storage area based on the first write pointer of the third storage area, and determine a size of written space in the third storage area based on the second write pointer of the third storage area;

an occupying module, configured to: if it is determined that the size of the written space in the third storage area is equal to the size of the allocated space in the third storage area, perform a MAX operation on the third storage area, to occupy a second subarea in the third storage area; and

a reading module, configured to read second data stored in the second subarea.

According to a fifth aspect, an implementation of this application provides an electronic device, including: a memory, configured to store instructions executed by one or more processors of the electronic device; the processor, where when the processor executes the instructions in the memory, the electronic device may be enabled to perform the data writing method provided in any implementation of the first aspect of this application or perform the data reading method provided in any implementation of the second aspect of this application. For beneficial effect that can be achieved in the fifth aspect, refer to beneficial effect of any implementation of the first aspect of this application or beneficial effect of any implementation of the second aspect of this application. Details are not described herein again.

According to a sixth aspect, an implementation of this application provides a computer-readable storage medium, where the computer-readable storage medium stores instructions. When the instructions are executed on a computer, the computer is enabled to perform the data writing method provided in any implementation of the first aspect of this application or the data reading method provided in any implementation of the second aspect of this application. For beneficial effect that can be achieved in the sixth aspect, refer to beneficial effect of any implementation of the first aspect of this application or beneficial effect of any implementation of the second aspect of this application. Details are not described herein again.

## BRIEF DESCRIPTION OF DRAWINGS

FIG. 1 is a diagram of an application scenario according to an embodiment of this application;

FIG. 2 is a diagram of an application scenario according to another embodiment of this application;

FIG. 3 is a diagram of an application scenario according to still another embodiment of this application;

FIG. 4a is a diagram of a structure of a circular storage queue according to some embodiments;

FIG. 4b to FIG. 4e are diagrams of writing data by a plurality of writers according to some embodiments;

FIG. 5 is a flowchart of a data writing method according to an embodiment of this application;

FIG. 6 is a diagram of a structure of a circular storage queue according to an embodiment of this application;

FIG. 7A and FIG. 7B are a flowchart of a data writing method according to another embodiment of this application;

FIG. 8 is a diagram of a structure of a circular storage queue according to another embodiment of this application;

FIG. 9 is a flowchart of a data reading method according to an embodiment of this application;

FIG. 10A and FIG. 10B are a flowchart of a data reading method according to another embodiment of this application;

FIG. 11a to FIG. 11c are diagrams of performance comparison according to an embodiment of this application;

FIG. 12 is a diagram of performance comparison according to another embodiment of this application;

FIG. 13 is a block diagram of a data writing apparatus according to an embodiment of this application;

FIG. 14 is a block diagram of a data reading apparatus according to an embodiment of this application;

FIG. 15 is a block diagram of an electronic device according to an embodiment of this application; and

FIG. 16 is a diagram of a structure of a system on chip (system on chip, SOC) according to an embodiment of this application.

## DESCRIPTION OF EMBODIMENTS

The following clearly and completely describes the technical solutions in embodiments of this application with reference to the accompanying drawings in embodiments of this application. To facilitate understanding of solutions of this application, the following first describes some professional nouns in embodiments of this application.

Weak memory model: In an architecture defined by a specific central processing unit (central processing unit, CPU) and a tool chain combination, a memory access sequence executed by a program may be inconsistent with a code writing order. An architecture in which any memory access rearrangement exists is referred to as a weak memory order architecture, and a rearrangement rule of the architecture is referred to as a weak memory model.

Atomic operation: An atomic operation is an operation that is not interrupted by a thread scheduling mechanism. Once the operation starts, the operation runs until the operation ends, and no switchover to another thread is performed.

Compare and swap (compare and swap, CAS) operation: The compare and swap operation is an atomic operation, and is used to implement an uninterrupted data swap operation in multi-thread programming, to avoid data inconsistency caused by uncertainty of an execution order and unpredictability of an interrupt when a plurality of threads rewrite a piece of data at the same time. Head: In a circular storage queue, the head refers to a location where a next read/write operation is performed.

Writer (producer, producer)/Reader (consumer, consumer): The producer is a thread that writes data to a circular storage queue, and the consumer is a thread that reads data from the circular storage queue.

MAX operation: The MAX operation is an atomic operation similar to the CAS operation, and is used to compare two values. If a second value is greater than a first value, the second value is assigned to the first value and the first value before update is returned. If the second value is less than or equal to the first value, the first value is directly returned without update.

Fetch and add (fetch and add, FAA) operation: The fetch and add operation is an atomic operation used to add a specified value to content at a storage location.

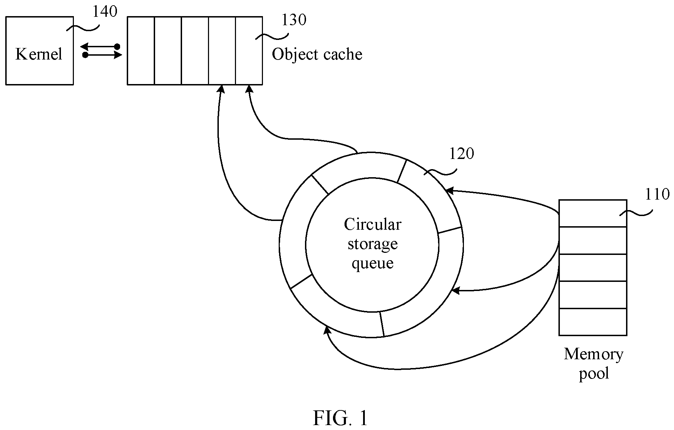

FIG. 1 is a diagram of an application scenario according to an embodiment of this application. As shown in FIG. 1, a method provided in embodiments of this application may be applied to a memory pool (memory pool) module of a storage product. Specifically, compressed data in a memory pool 110 is written into a circular storage queue 120. A thread reads data from the circular storage queue 120, and stores the read data in an object cache 130 for use by an operating system kernel 140. The circular storage queue and a corresponding data writing method and data reading method provided in embodiments of this application can improve end-to-end product performance by 4%.

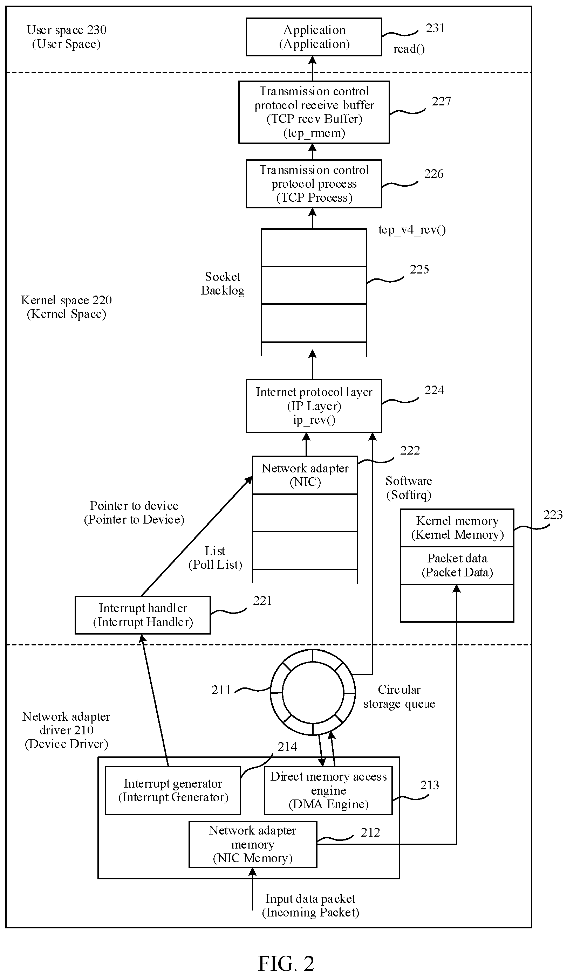

FIG. 2 is a diagram of an application scenario according to another embodiment of this application. As shown in FIG. 2, the method provided in embodiments of this application may be applied to a scenario in which a network adapter driver receives and sends a data packet. Specifically, a network adapter driver 210 communicates with a kernel space 220 by using a circular storage queue 211. When an input data packet arrives at the network adapter, the network adapter driver 210 first stores the input data packet in a network adapter memory 212, and writes the input data packets in the network adapter memory 212 into the circular storage queue 211 one by one by invoking a direct memory access engine (direct memory access engine, DMA engine) 213. After the DMA engine 213 finishes reading the input data packet in the network adapter memory 212, an interrupt generator 214 may trigger an interrupt request. After an interrupt handler 221 in the kernel space 220 receives the interrupt request, a network adapter 222 may register a poll function, read the data packet from the circular storage queue 211 by using the poll function, and put the data packet into a list, to transfer the data packet stored in the network adapter memory 212 to a kernel memory 223. When the data packet is read by using the poll function, the interrupt request is disabled. **In** this way, no new interrupt request is sent before all data packets are read by using the poll function. After data is read by using the poll function, the interrupt request is enabled. An Internet protocol layer 224 may obtain the data packet from the list, and place the data packet in a socket waiting connection queue 225. A transmission control protocol process 226 may obtain the data packet from the socket waiting connection queue 225, and store the data packet in a transmission control protocol receive buffer 227, to send the data packet to an application program 231 in a user space 230.

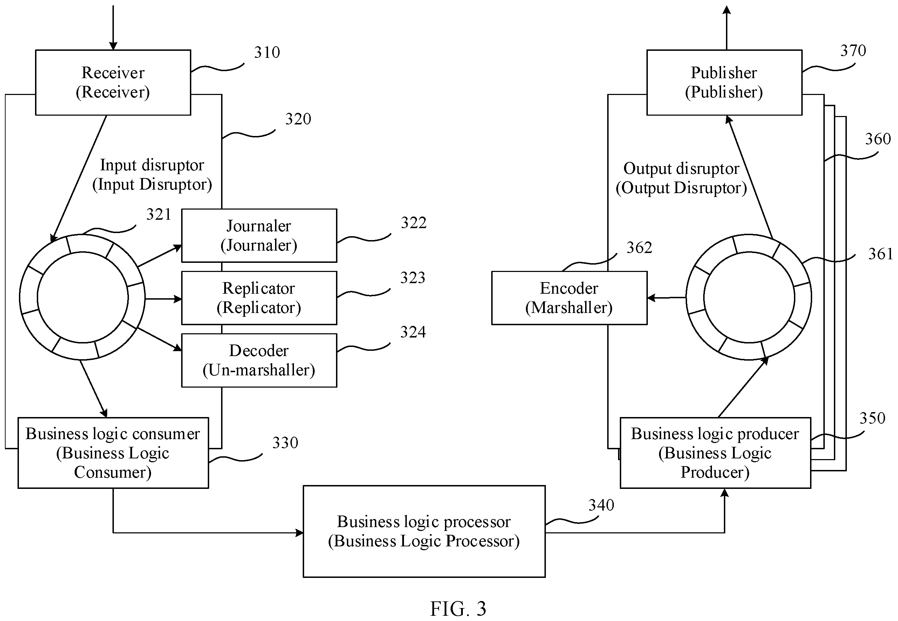

FIG. 3 is a diagram of an application scenario according to still another embodiment of this application. As shown in FIG. 3, the method provided in embodiments of this application may be applied to a high frequency trading scenario. Specifically, a receiver 310 is configured to receive data, and write the received data into a circular storage queue 321 in an input disruptor 320. A journaler 322, a replicator 223, and a decoder 324 may read the data in the circular storage queue 321, to perform logging, replication, and deserialization operations. A business logic consumer 330 may read the data in the circular storage queue 321, process the data through a business logic processor 340, and send the data to a business logic producer 350. The business logic producer 350 may write the received data into a circular storage queue 361 in an output disruptor 360. An encoder 362 and a publisher 370 may read the data in the circular storage queue 361, to perform serialization and publishing operations.

The circular storage queue is a special first in first out queue, and connects a head and a tail of an order queue, that is, a last location of storage space is connected to a first location, to form logical ring space. The circular storage queue may not only be used in the foregoing memory pool module, but also be used in scenarios such as communication between a device and a protocol stack, sending and receiving data packets in network communication, recording log data by a kernel profiling tool, and concurrency control of a base library in a kernel driver framework. Compared with the order queue, the circular storage queue is more complex during implementation. Special cases such as read/write rewind need to be considered. Especially in a concurrent process of a plurality of readers and a plurality of writers, synchronization between the readers and the writers, synchronization between the writers, and synchronization between the readers need to be considered. Especially in the weak memory model, a read and write order is uncertain, which brings great difficulties to implementation.

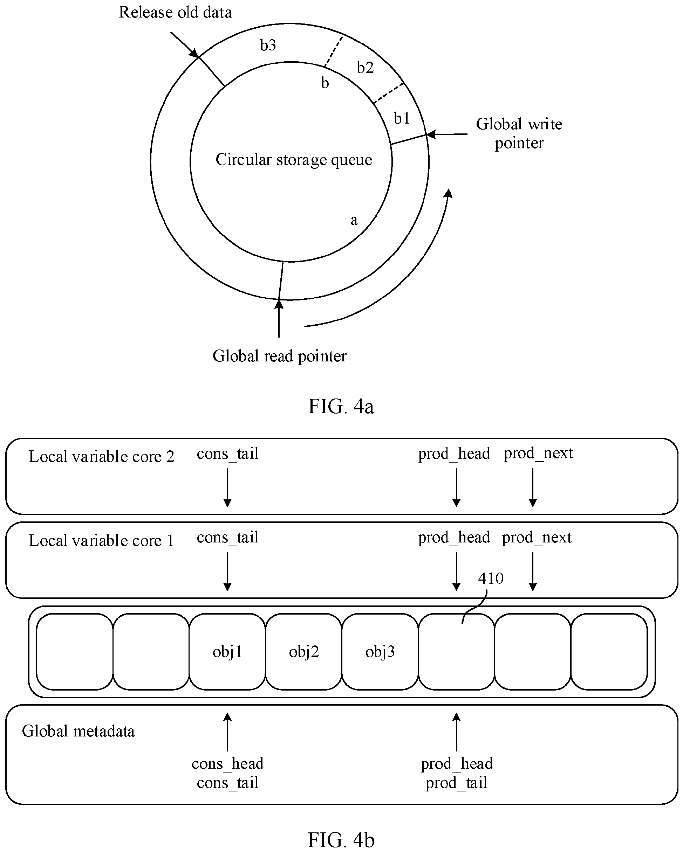

FIG. 4a is a diagram of a structure of a circular storage queue according to some embodiments. As shown in FIG. 4a, the circular storage queue includes a corresponding global write pointer and a corresponding global read pointer. In an anticlockwise direction, an area between the global write pointer and the global read pointer is a storage area b, and an area between the global read pointer and the global write pointer is an area a. Data in the area a is about to be read, and data in the area b is about to be written. As data is written and read, the global write pointer and the global read pointer move in the anticlockwise direction. For example, after a thread 1 is allocated to a storage area b1, the global write pointer moves to a storage area b2. After a thread 2 is allocated to the storage area b2, the global write pointer moves to a storage area b3.

After data is written, different threads update global metadata in sequence based on an allocation order and perform an in-order commit operation. The allocation order refers to moving directions of the global write pointer and the global read pointer. For example, in FIG. 4a, the allocation order is an anticlockwise direction. Specifically, after the data is written into the storage area b1, the thread 1 performs the commit operation. The commit operation represents that the data has been written into the storage area b1, and the data in the storage area b1 can be read. Similarly, after the data is written into the storage area b2, the thread 2 performs the commit operation. The commit operation represents that the data has been written into the storage area b2, and the data in the storage area b2 can be read.

When an in-order commit operation is performed, even if the thread 2 writes the data before the thread 1, the thread 2 needs to wait for the thread 1 to complete the commit operation. If the thread 1 has not performed the commit operation, the thread 2 enters a waiting state, and performs the commit operation only after the thread 1 completes the commit operation. During waiting, the thread 2 needs to frequently determine whether the thread 1 completes the commit operation. This reduces system running efficiency.

Specifically, in implementation 1, refer to FIG. 4b to FIG. 4e. For a lock-free circular storage queue with a plurality of readers and a plurality of writers, when a plurality of writers (a local variable core 1 and a local variable core 2) write data into the lock-free circular storage queue, the plurality of writers first read a global write head pointer prod_head in global metadata, to determine a global write location. As shown in FIG. 4b, both the local variable core 1 and the local variable core 2 determine that a location 410 pointed to by the global write head pointer prod_head is the global write location (for example, a location 410 pointed to by prod_head of the local variable core 1 and a location 410 pointed to by prod_head of the local variable core 2).

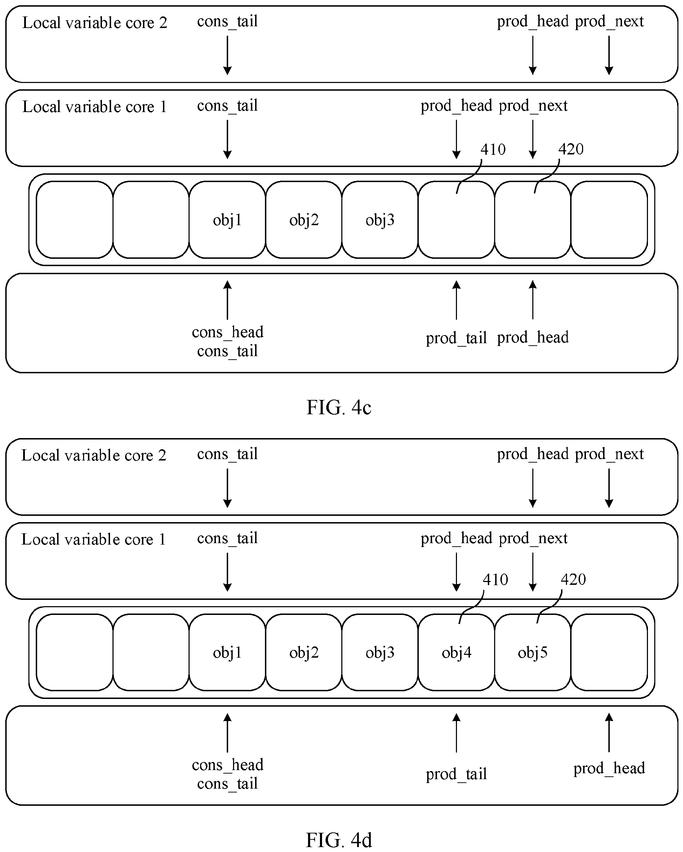

After the global write location is determined, the plurality of writers perform a head preemption operation to determine respective write locations. Specifically, the plurality of writers respectively update the global write head pointer prod_head by using an atomic operation. If the global write head pointer prod_head is successfully updated, it indicates that head preemption succeeds. As shown in FIG. 4c, the local variable core 1 successfully preempts a head, and updates the global write head pointer prod_head to a next location pointing to the global write location (for example, a location pointed to by prod_next of the local variable core 1), and determines that the location 410 is a location (for example, pointed to by prod_head of the local variable core 1) to which the local variable core 1 is written. If the local variable core 2 fails to preempt the head, the head preemption operation is performed again, and the location 420 is determined as a location (for example, pointed to by prod_head of the local variable core 2) to which the local variable core 2 is written.

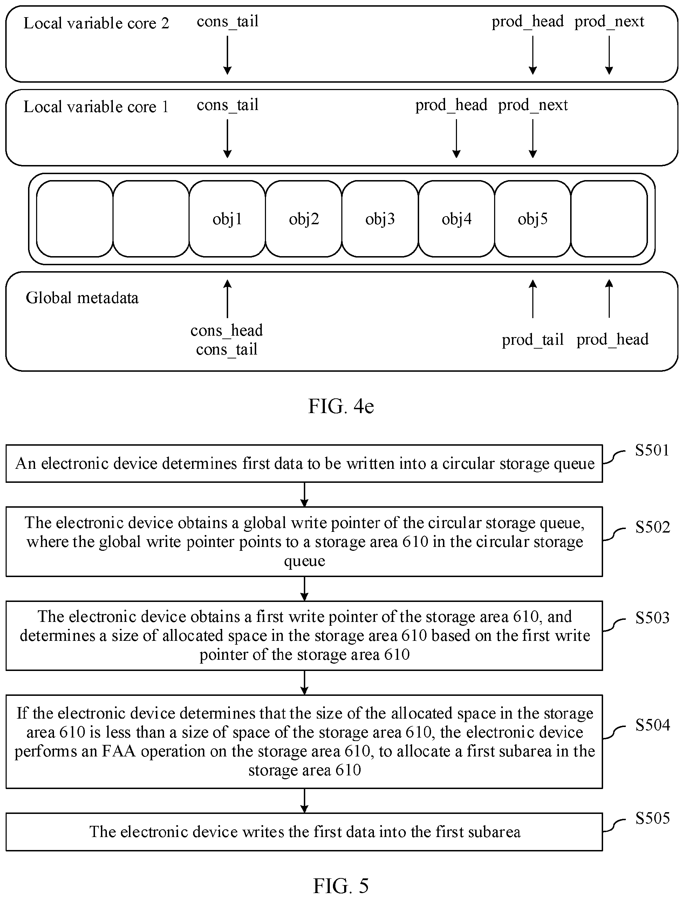

Then, the plurality of writers separately perform write operations at respective write locations. As shown in FIG. 4d, the local variable core 1 writes data obj4 to the location 410, and the local variable core 2 writes data obj5 to the location 420. After the data is written, the plurality of writers update a global write tail pointer prod_tail in the global metadata based on the allocation order, to perform the commit operation. As shown in FIG. 4e, the local variable core 1 first performs the commit operation, and updates the global write tail pointer prod_tail to a next location (for example, a location pointed to by prod_next of the local variable core 1) pointing to a location at which the global write tail pointer prod_tail is written. After the operation is completed, the local variable core 2 performs the commit operation.

When the plurality of readers read data from the lock-free circular storage queue, similar to writing data by the plurality of writers, the plurality of readers read a global read head pointer cons_head in the global metadata to determine the global read location. After the data is read, a global read tail pointer cons_tail in the global metadata is updated based on an occupation order, to perform the consume operation. A specific operation process is similar to that of writing data by the plurality of writers. Details are not described herein again in embodiments of this application.

In the foregoing implementation, after writing data, each writer updates the global metadata in an allocation order, and performs the commit operation. A writer allocated later needs to wait for a writer allocated earlier to complete the operation. Similar waiting operations are performed for the plurality of readers. This causes a low multi-core throughput rate. Each thread shares the global metadata. The global metadata needs to be read each time a read/write location is determined, and the global metadata needs to be updated each time a read/write operation is performed. As a result, bus preemption is high and a multi-core throughput rate is low.

Specifically, in implementation 2, for the lock-free circular storage queue with the plurality of readers and the plurality of writers, two pieces of global metadata Head and Tail are set for the lock-free circular storage queue, which respectively represent a write location and a read location of the lock-free circular storage queue. Words of Cycle, Index, and IsSafe are set for each storage area. Cycle indicates a quantity of rewind times of the circular storage queue, and Index indicates offset in the circular storage queue. In this implementation, when a writer performs out-of-order writing, to ensure linearization of an operation, when a reader exceeds the writer performing out-of-order writing, a storage area in which data is currently written needs to be closed, and data is read from a next storage area. In another case, because FAA cannot perform judgment and execution atomically, a reader location may exceed a writer location. In this case, the reader still needs to close the written storage area. Both scenarios cause great performance loss. For specific content of the foregoing implementations, refer to related descriptions in the article " A Scalable, Portable, and Memory-Efficient Lock-Free FIFO Queue". Details are not described herein again in embodiments of this application.

Therefore, embodiments of this application provide a data writing method, a data reading method, an apparatus, an electronic device, and a storage medium, to reduce a cache miss rate and improve overall system performance.

According to the method provided in embodiments of this application, block management is performed on the circular queue, a writer location is allocated by using the global write pointer, and produced information (including local metadata related to a writer: the first write pointer allocated and the second write pointer committed) is locally collected in each storage area. The electronic device may determine a size of allocated space in the first storage area based on the first write pointer allocated of the first storage area. When the size of the allocated space in the first storage area is less than a size of space of the first storage area, the electronic device may determine that the first storage area still has storage space. When determining that the first storage area still has the storage space, the electronic device allocates a first subarea in the first storage area by using an FAA instruction, to store to-be-stored data.

In embodiments of this application, block management is performed on the circular queue, so that there is no mutual competition interference when a reader and a writer are not in a same storage area, cache miss caused by data competition between the reader and the writer are reduced, and system performance is improved. In addition, in a process of allocating storage space to a writer, the electronic device only needs to access local metadata related to the writer in a storage area to determine a writable status of the storage area, and does not need to access local metadata and global metadata related to a reader, thereby reducing pressure on a system bus, reducing mutual competition interference between a reader and a writer in a same storage area, reducing cache miss that is of the writer and that is caused by metadata updating of by the reader, and further improving overall system performance. In addition, a data exchange operation is implemented by using an FAA instruction, the size of the allocated space is recorded, and a case in which the allocated space exceeds an upper bound does not need to be considered, thereby effectively reducing operation complexity, reducing system synchronization overheads, and improving system scalability.

It should be noted that the foregoing application scenario is merely an example. The method provided in embodiments of this application may be further applied to another scenario in which a circular storage queue is used, for example, a scenario in which a kernel event is recorded in an operating system kernel that uses a circular storage queue, and an inter-process communication scenario. It should be understood that "first", "second", "target" used in this application are merely for differentiation and description, but cannot be understood as an indication or implication of relative importance or an indication or implication of a sequence. In addition, for brevity and clarity, reference numbers and/or letters are repeated in a plurality of accompanying drawings of this application. Repetition is not indicative of a strict limiting relationship between various embodiments and/or configurations.

The following describes a specific procedure of the data writing method provided in embodiments of this application.

FIG. 5 is a schematic implementation flowchart of a data writing method according to an embodiment of this application. It should be understood that the data writing method may be executed by a thread, an operating system, or an electronic device on which an operating system is installed. Subsequently, the data writing method is described by using an example in which the data writing method is executed by an electronic device.

In embodiments of this application, another circular storage queue is used. Specifically, the circular storage queue is divided into M logical storage areas, where M is an integer greater than 1, and each storage area is logically continuous. Each storage area is divided into N subareas logically, where N is an integer greater than 1, and each subarea is logically continuous. A queue head of the circular storage queue includes corresponding global metadata, and the global metadata includes a global write pointer and a global read pointer. As data is written and read, locations of the global write pointer and the global read pointer continuously change in a logical direction. An area head of each storage area includes corresponding local metadata, and the local metadata includes a first write pointer allocated.

Sizes of space of the storage areas in the circular storage queue provided in embodiments of this application may be the same or may be different, and sizes of space of the subareas may be the same or may be different. A specific value of a size of space of each storage area/subarea may be preset by a user based on an actual requirement. This is not limited in embodiments of this application. Preferably, the sizes of the space of the storage areas may be set to be the same, and the sizes of the space of the subareas may also be set to be the same.

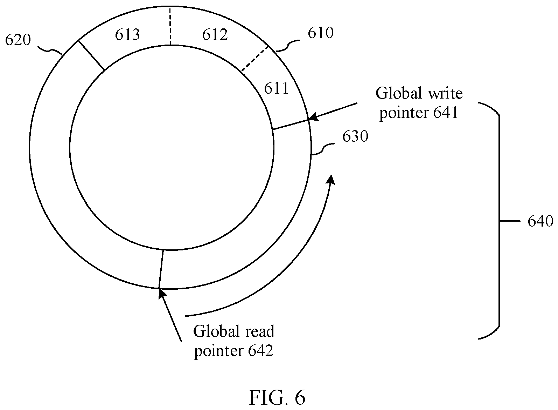

For example, FIG. 6 is a diagram of a structure of a circular storage queue according to an embodiment of this application. As shown in FIG. 6, the circular storage queue includes three storage areas, and sizes of space of the three storage areas may be set according to a requirement. In this embodiment, for ease of description, it is assumed that the sizes of the space of the three storage areas are the same. The three storage areas are respectively a storage area 610, a storage area 620, and a storage area 630. Each storage area includes a plurality of subareas, and a size of space of each subarea may also be set according to a requirement. In this embodiment, for ease of description, it is assumed that the sizes of the space of the subareas are the same. For example, the storage area 610 includes a subarea 611, a subarea 612, and a subarea 613. The three storage areas correspond to three first write pointers allocated, and the three storage areas correspond to the three allocated in a one-to-one manner.

As shown in FIG. 6, the circular storage queue includes global metadata 640, and the global metadata 640 includes a global write pointer 641 and a global read pointer 642. In FIG. 6, a logical direction is an anticlockwise direction. It should be understood that, in an actual application, the logical direction may alternatively be a clockwise direction. The circular storage queue is logical ring space. Therefore, the global write pointer or the global read pointer may cyclically pass through a same area.

As shown in FIG. 5, a procedure of the data writing method includes the following steps S501 to S505.

S501: An electronic device determines first data to be written into a circular storage queue.

In different scenarios, the first data to be written into the circular storage queue may be different types of data. For example, in a scenario in which a kernel event is recorded in an operating system kernel that uses the circular storage queue, the first data is kernel event data. In a scenario in which a network adapter driver receives and sends a data packet, the first data is an input data packet. This is not limited in embodiments of this application.

S502: The electronic device obtains a global write pointer of the circular storage queue, where the global write pointer points to the storage area 610 (used as an instance of a first storage area) in the circular storage queue.

In embodiments of this application, the electronic device may obtain the global write pointer from a queue head of the circular storage queue. The global write pointer points to the storage area 610. Specifically, the global write pointer may point to a start location of the storage area 610, and the start location may be a first byte of the storage area 610. In a data writing process, the electronic device writes data by using a subarea as a unit. For example, the storage area 610 includes the subarea 611, the subarea 612, and the subarea 613. The electronic device allocates the subarea 611 to a thread 1, and allocates the subarea 612 to a thread 2. The thread 1 writes data in the 1st subarea 611, and the thread 2 writes data in the 2nd subarea 612.

S503: The electronic device obtains a first write pointer of the storage area 610, and determines a size of allocated space in the storage area 610 based on the first write pointer of the storage area 610.

In embodiments of this application, each storage area corresponds to one piece of local metadata, the local metadata includes a first write pointer allocated, and allocated includes 64 bits and includes two parts: offset and version. An offset value is used to represent a location of a last allocated subarea in a corresponding storage area in a last write rewind, and a version value is used to represent a quantity of currently allocated local write rewind times in the corresponding storage area. A size of space that has been allocated in a corresponding storage area in a last write rewind may be determined based on an offset value in the allocated first write pointer.

It should be understood that, in embodiments of this application, the size of the allocated space in the storage area 610 includes only a size of storage space that has been allocated to the electronic device in a last write rewind. Specifically, as data is written, the electronic device cyclically allocates storage space of the storage area 610. For example, in a first write rewind, the electronic device allocates the three subareas of the storage area 610 to the thread 1, the thread 2, and a thread 3. In a second write rewind, the electronic device allocates the three subareas of the storage area 610 to the thread 2, the thread 3, and a thread 4. In the last write rewind, the electronic device allocates only the subarea 611 to a thread 5. In this case, a size of allocated space in the storage area 610 is a size of space of a 1st subarea allocated in a last write rewind.

In embodiments of this application, the offset value and the version value in the first write pointer allocated change with an allocation operation of allocating storage space in the storage area by the electronic device. For example, the storage area 610 includes the subarea 611, the subarea 612, and the subarea 613. When the storage area 610 is not allocated, both the offset value and the version value in the first write pointer allocated of the storage area 610 may be 0. The electronic device allocates the subarea 611 to the thread 1. In this case, the offset value in the first write pointer allocated of the storage area 610 changes to 1. The electronic device allocates the subarea 612 to the thread 2. In this case, the offset value in the first write pointer allocated of the storage area 610 changes to 2.

S504: If the electronic device determines that the size of the allocated space in the storage area 610 is less than a size of space of the storage area 610, the electronic device performs an FAA operation on the storage area 610, to allocate a first subarea in the storage area 610.

In embodiments of this application, the electronic device may compare the size of the allocated space in the storage area 610 with the size of the space of the storage area 610, to determine whether the storage area 610 is completely allocated. When the size of the allocated space in the storage area 610 is less than the size of the space of the storage area 610, it indicates that the storage area 610 is not completely allocated. When the size of the allocated space in the storage area 610 is not less than the size of the space of the storage area 610, it indicates that the storage area 610 is completely allocated.

In an embodiment, the global metadata of the circular storage queue may further include a size of space of each storage area, and the electronic device may read the size of the space of the storage area 610 from a queue head of the circular storage queue. Alternatively, the local metadata of each storage area of the circular storage queue may further include a corresponding space size, and the electronic device may read the size of the space of the storage area 610 from an area head of the storage area 610. It should be understood that the size of the space of the storage area 610 may be preset based on a requirement. This is not limited in embodiments of this application.

In embodiments of this application, if the electronic device determines that the storage area 610 is not completely allocated, the electronic device allocates the first subarea in the storage area 610 by performing the FAA operation on the storage area 610. Specifically, an operation of adding 1 to the first write pointer of the storage area 610 may be performed by performing an FAA (blk.allocated, 1) operation, to perform a subarea allocation operation. If the FAA operation is successfully performed, it indicates that the electronic device updates the first write pointer of the storage area 610.

It should be understood that the electronic device pre-checks whether the storage area 610 is completely allocated, to avoid problems of data overflow and a performance loss are caused when performing the FAA operation when a plurality of threads write data, even if the size of the allocated space in the storage area 610 is greater than or equal to the size of the space of the storage area 610.

S505: The electronic device writes the first data into the first subarea.

In embodiments of this application, data is written based on an allocate-write data-commit procedure. After determining that the first subarea is successfully allocated to the storage area 610, the electronic device writes the first data to be written into the circular storage queue into the first subarea, and performs a commit operation, to complete data writing.

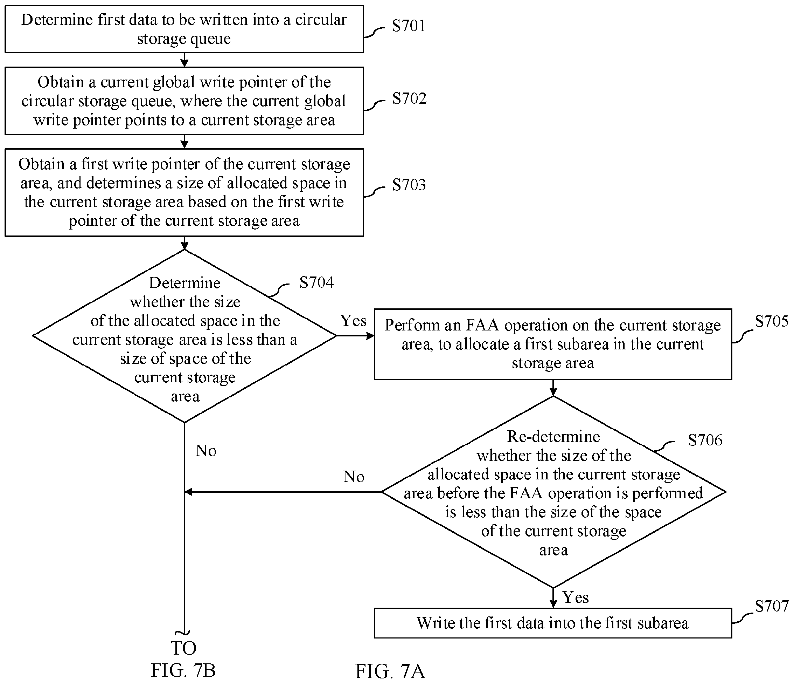

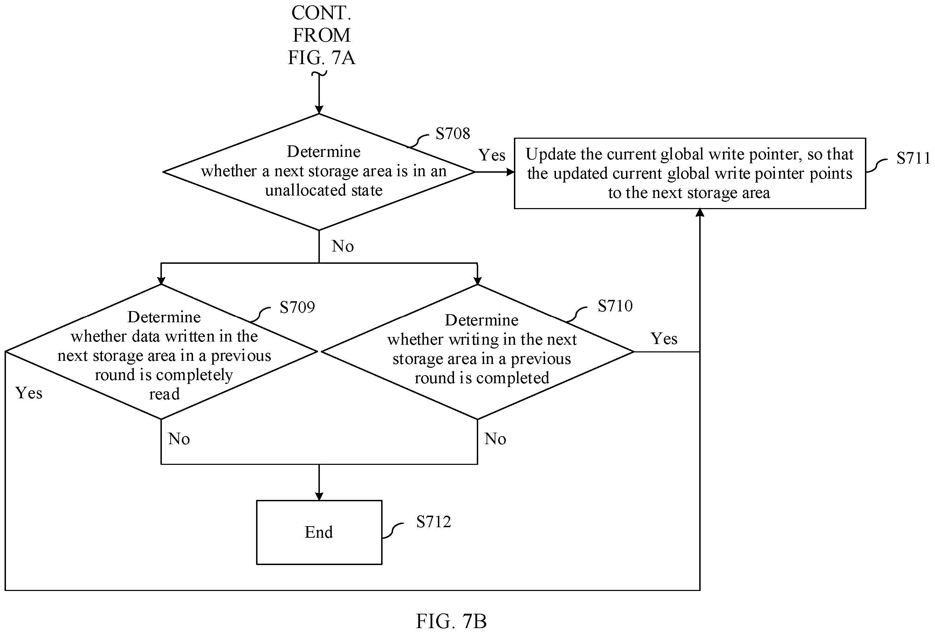

In an embodiment of this application, refer to FIG. 7A and FIG. 7B. FIG. 7A and FIG. 7B are a schematic implementation flowchart of a data writing method according to another embodiment of this application. As shown in FIG. 7A and FIG. 7B, the procedure includes the following steps S701 to S712.

S701: An electronic device determines first data to be written into a circular storage queue.

For specific content in step S701, refer to related descriptions in the embodiment shown in FIG. 5. Details are not described herein again in embodiments of this application.

S702: The electronic device obtains a current global write pointer of the circular storage queue, where the current global write pointer points to a current storage area.

The electronic device may obtain the current global write pointer from a queue head of the circular storage queue. For descriptions of the circular storage queue, refer to the related descriptions in FIG. 5 or FIG. 6. The electronic device obtains the current global write pointer of the circular storage queue, where the current global write pointer is also referred to as the current global write pointer, the current global write pointer points to the storage area 610 (used as an instance of the first storage area) in the circular storage queue, and the storage area 610 is also referred to as a current storage area.

Specifically, the queue head of the circular storage queue may be used to store corresponding global metadata, and the global metadata includes a global write pointer widx and a global read pointer ridx. The global write pointer widx and the global read pointer ridx include 64 bits, which respectively indicate an index of the storage area of current read (ridx) and write (widx). widx and ridx include two parts: index and version. An index value indicates a location of a current read/write storage area, for example, a number of the current read/write storage area. A version value indicates a current quantity of global read/write rewind times. An algorithm for calculating a quantity of bits of index is as follows:

$$|index| = \log_2(num\_block) \text{bits}$$

num_block indicates a quantity of storage areas, may be set by a user, and is stored in queue configuration information (buffer config) during initialization. That is, the queue head of the circular storage queue may be further used to store configuration information such as a size of the queue (that is, the quantity of storage areas), a size of space of each storage area. Remaining bits except |index| in widx and ridx are |version|. Index occupies a lower |index| bit of the global metadata, and version occupies a higher |version| bit. During queue initialization, all version values are 0.

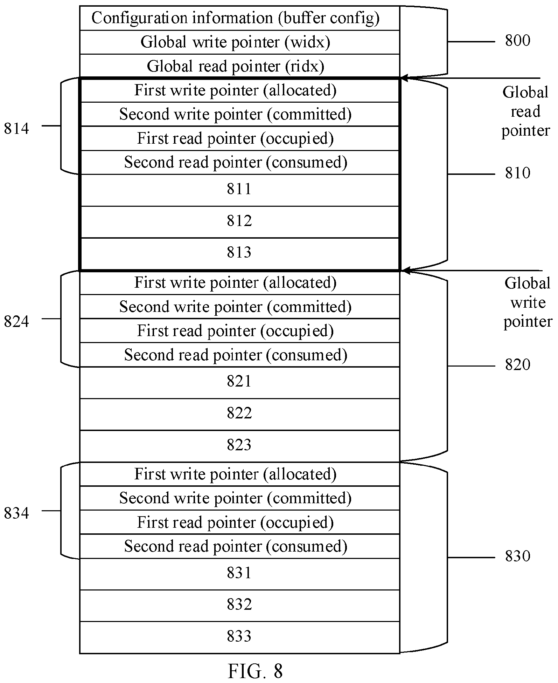

For example, FIG. 8 is a diagram of a structure of a circular storage queue according to another embodiment of this application. As shown in FIG. 8, the circular storage queue includes three storage areas. The three storage areas are respectively a storage area 810, a storage area 820, and a storage area 830. The storage area 810 includes a subarea 811, a subarea 812, and a subarea 813. The storage area 820 includes a subarea 821, a subarea 822, and a subarea 823. The storage area 830 includes a subarea 831, a subarea 832, and a subarea 833. The circular storage queue further includes a queue head 800. The queue head 800 may be configured to store a global write pointer widx and a global read pointer ridx. In FIG. 8, the global write pointer widx points to a storage area 820, and the global read pointer ridx points to the storage area 810.

S703: The electronic device obtains a first write pointer of the current storage area, and determines a size of allocated space in the current storage area based on the first write pointer of the current storage area.

The electronic device may obtain the first write pointer from the area head of the current storage area. For descriptions of the current storage area, refer to related descriptions in FIG. 5 or FIG. 6. Specifically, each storage area may further include a corresponding area head. The area head is used to store corresponding local metadata. The local metadata may include four pointers: a first write pointer allocated, a second write pointer committed, a first read pointer reserved, and a second read pointer consumed. Similar to global metadata, the local metadata includes 64 bits and includes two parts: offset and version. An offset value in allocated/reserved is used to represent a location of a last allocated/occupied subarea in a corresponding storage area in a last write/read rewind. In the last write/read rewind, a size of allocated/occupied space in a corresponding storage area may be determined based on the offset value in allocated/reserved. A version value in allocated/reserved is used to represent a quantity of currently allocated local write rewind times/a quantity of currently occupied local read rewind times in the corresponding storage area. An offset value in committed/consumed is used to represent a size of written/read space in a corresponding storage area in the last write/read rewind. A version value in committed/consumed is used to represent a quantity of currently written local write rewind times in the corresponding storage area/a quantity of currently read local read rewind times in the corresponding storage area.

Specifically, an algorithm for calculating a quantity of bits of offset is as follows:

$$|\text{offset}| = 1 + \log_2(\text{block\_size})\text{bits}$$

block_size indicates a quantity of subareas, may be set by a user, and is stored in queue configuration information (buffer config) during initialization. Remaining bits except |offset| in allocated, committed, reserved, and consumed are bits |version| of version. Offset occupies a lower |offset| bit of the local metadata, and version occupies a higher |version| bit. During queue initialization, all version values are 0.

For example, as shown in FIG. 8, the storage area 810 includes an area head 814. The area head 814 is used to store the local metadata of the storage area 810, including allocated, committed, reserved, and consumed. Similarly, the storage area 820 includes an area head 824. The storage area 830 includes an area head 834.

S704: The electronic device determines whether the size of the allocated space in the current storage area is less than the size of the space of the current storage area.

In embodiments of this application, the electronic device may compare the size of the allocated space in the current storage area with the size of the space of the current storage area, to determine whether the current storage area is completely allocated. If the electronic device determines that the current storage area is not completely allocated, the electronic device performs step S705. If the electronic device determines that the current storage area is completely allocated, the electronic device performs step S708.

S705: The electronic device performs an FAA operation on the current storage area, to allocate the first subarea in the current storage area.

For other related content in step S702 to step S705, refer to related descriptions in the embodiment shown in FIG. 5. Details are not described again in embodiments of this application.

S706: The electronic device re-determines whether the size of the allocated space in the current storage area before the FAA operation is performed is less than the size of the space of the current storage area.

In embodiments of this application, because there may be a plurality of threads that simultaneously write data, the electronic device needs to separately perform an FAA operation on the current storage area, to allocate a subarea to each thread. To avoid a case in which all subareas in the current storage area are allocated because FAA operations are performed at the same time, step S706 may be further performed after step S705.

Specifically, an offset value in the first write pointer (denoted as blk.allocated) of the current storage area before the FAA operation is performed may be obtained, and the obtained offset value is re-checked, to determine whether the size of the allocated space in the current storage area is still less than the size of the space of the current storage area. If the size of the allocated space in the current storage area is less than the size of the space of the current storage area, information about the allocated first subarea is returned, and the electronic device performs step S707. If the size of the allocated space in the current storage area is not less than the size of the space of the current storage area, it is determined that the current storage area has been allocated (that is, there is no storage space), and the electronic device performs step S708.

In actual application, each subarea may further include a corresponding metadata offset, and the metadata offset is used to indicate a location of the subarea in a corresponding storage area. The electronic device returns information EntryDesc of the allocated subarea in the current storage area. EntryDesc includes two parts: block and offset. A block value indicates a storage area (that is, the current storage area) in which the allocated subarea is located, and an offset value indicates a location of the allocated subarea in the corresponding storage area.

S707: The electronic device writes the first data into the first subarea.

For specific content in step S707, refer to related descriptions in the embodiment shown in FIG. 5. Details are not described herein again in embodiments of this application. In a commit operation process performed by the electronic device, 1 may be further added to the second write pointer of the current storage area. If the electronic device successfully performs the commit operation, it indicates that the electronic device updates the second write pointer of the current storage area. S708: When the current storage area has been allocated, the electronic device determines whether a next storage area is in an unallocated state.

The next storage area is a next storage area logically adjacent to the current storage area, that is, a next storage area that is adjacent to the current storage area in a logical direction. For example, in FIG. 8, if the current storage area is the storage area 830, the next storage area is the storage area 810 adjacent to the storage area 830. When determining that the current storage area has been allocated, the electronic device may determine whether the next storage area is in the unallocated state. If the electronic device determines that the next storage area is in the unallocated state, the electronic device may determine that the status of the next storage area is a writable state. In this case, the electronic device determines that the current global write pointer can be updated, and the electronic device performs step S711. If the electronic device determines that the next storage area is in an allocated state, the electronic device performs step S709 or performs step S710. Specifically, the electronic device may determine, based on the first write pointer allocated corresponding to the next storage area, whether the next storage area has been allocated. If both an offset value and a version value in the first write pointer allocated corresponding to the next storage area are 0, the electronic device determines that the next storage area has not been allocated. If an offset value or a version value in the first write pointer allocated corresponding to the next storage area is not 0, the electronic device determines that the next storage area has been allocated. S709: The electronic device determines whether reading in the next storage area in the previous round is completed.

In embodiments of this application, when the electronic device determines that the next storage area has been allocated, the electronic device may determine the current data write mode. If the current data write mode is a retry-new mode (used as an instance of the first mode), when reading in the next storage area in the previous round is not completed, writing overwrite data is skipped, to reduce a data loss. Therefore, when the current data write mode is the retry-new mode, the electronic device may first determine whether reading in the next storage area in the previous round is completed, and when reading is completed, determine that the status of the next storage area is the writable state. In this case, the electronic device determines that the current global write pointer can be updated, and the electronic device performs step S711. If the electronic device determines that reading in the next storage area in the previous round is not completed, and a status of the next storage area is an unwritable state, the electronic device performs step S712. Specifically, when the current data write mode is the retry-new mode, the electronic device may obtain the second read pointer consumed of the next storage area, determine the size of the read space in the next storage area based on an offset value in the second read pointer consumed of the next storage area, and determine, based on a version value in the second read pointer consumed of the next storage area, the quantity of read local read rewind times in the next storage area. The electronic device determines the quantity of global write rewind times based on the current global write pointer. When the electronic device determines that the size of the read space in the next storage area is equal to the size of the space of the next storage area, and determines that the quantity of read local read rewind times in the next storage area is equal to the quantity of global write rewind times, it may be determined that reading in the next storage area in the previous round is completed, and the status of the next storage area is the writable state. In this case, the electronic device performs step S711. Alternatively, the size of the space of the next storage area may be preset based on an actual requirement. This is not limited in embodiments of this application either. Specifically, if the electronic device determines that the size of the read space in the next storage area is not equal to the size of the space of the next storage area, it indicates that reading in the next storage area in the previous round is not completed, and the status of the next storage area is the unwritable state. In this case, the electronic device performs step S712.

Specifically, in the foregoing step S702, the electronic device obtains the current global write pointer. In a multi-thread concurrent scenario, another thread may have modified the current global write pointer. For example, the another thread completes subsequent step S711. Therefore, the electronic device determines, by determining whether the quantity of read local read rewind times in the next storage area is equal to the quantity of global write rewind times, whether the another thread has updated the current global write pointer. If the foregoing condition is not met, it indicates that another thread has updated the current global write pointer. In this case, the current global write pointer is no longer updated, and the electronic device performs step S712.

In an embodiment, in a case in which reading in the next storage area in the previous round is not completed, the electronic device may further obtain a first read pointer reserved of the next storage area, and determine a size of occupied space in the next storage area based on an offset value in the first read pointer reserved of the next storage area. The electronic device may determine whether the size of the occupied space in the next storage area is equal to the size of the read space in the next storage area. If the size of the occupied space in the next storage area is equal to the size of the read space in the next storage area, it indicates that writing in the next storage area in the previous round is not completed (that is, not all subareas in the storage area are committed), but all subareas that have been written have been read. In this case, it may be defined that a queue is full and no more writing can be performed. In this case, the electronic device returns FULL, and performs step S712. In another case, it indicates that the another thread is performing a write or read operation, and the electronic device returns BUSY, and performs step S712.

S710: The electronic device determines whether writing in the next storage area in the previous round is completed.

In embodiments of this application, if the current data write mode is a drop-old mode (used as an instance of the second mode), when reading in the next storage area in the previous round is not completed, overwrite data is directly written, to improve data write efficiency. Therefore, when the current data write mode is the drop-old mode, the electronic device only needs to determine whether writing in the next storage area in the previous round is completed. When writing in the next storage area in the previous round of is completed, it is determined that the status of the next storage area is the writable state. In this case, the electronic device determines that the current global write pointer can be updated, and the electronic device performs step S711. If the electronic device determines that writing in the next storage area in the previous round is not completed, and a status of the next storage area is an unwritable state, the electronic device performs step S712. Specifically, when the current data write mode is the drop-old mode, the electronic device may obtain the second write pointer committed of the next storage area, determine, based on an offset value in the second write pointer committed of the next storage area, a size of written space in the next storage area, and determine, based on a version value in the second write pointer committed of the next storage area, the quantity of written local write rewind times in the next storage area. The electronic device determines the quantity of global write rewind times based on the current global write pointer. When the electronic device determines that the size of the written space in the next storage area is equal to the size of the space of the next storage area, and determines that the quantity of written local write rewind times in the next storage area is equal to the quantity of global write rewind times, it may be determined that writing in the next storage area in the previous round is completed, and the status of the next storage area is the writable state. In this case, the electronic device performs step S711.

Specifically, if the electronic device determines that the size of the written space in the next storage area is not equal to the size of the space of the next storage area, it indicates that writing in the next storage area in the previous round is not completed (that is, the subarea in the storage area is not completely committed), and the status of the next storage area is the unwritable state. In this case, the electronic device returns BUSY, and performs step S712. If the electronic device determines that the quantity of written local write rewind times in the next storage area is not equal to the quantity of global write rewind times, it indicates that an exception occurs, and the electronic device performs step S712.

S711: The electronic device updates the current global write pointer, so that the updated current global write pointer points to the next storage area.

In embodiments of this application, the electronic device may perform a MAX operation on the first write pointer and the second write pointer of the next storage area, to increase the first write pointer and the second write pointer of the next storage area by 1. The electronic device may perform the MAX operation on the current global write pointer, to update the current global write pointer, so that the current global write pointer points to the next storage area.

It should be understood that, when updating metadata, the electronic device first updates the local metadata, and then updates the global metadata. In addition, in the retry-new mode, after the storage area is completely written, corresponding local metadata is updated only after the storage area is completely read by a reader. This can reduce mutual competition interference between the reader and the writer, and reduce cache miss of the reader.

S712: End. The end may mean that the current thread in the electronic device abandons storing the first data, or the current thread in the electronic device returns to step S702.

In embodiments of this application, after performing step S711, the electronic device may return to step S702. In this case, the current global write pointer points to the next storage area, and the next storage area may be used as the current storage area, to allocate the first subarea in the next storage area, and write the first data into the first subarea, to complete data writing.

The following describes a specific procedure of the data reading method provided in embodiments of this application.

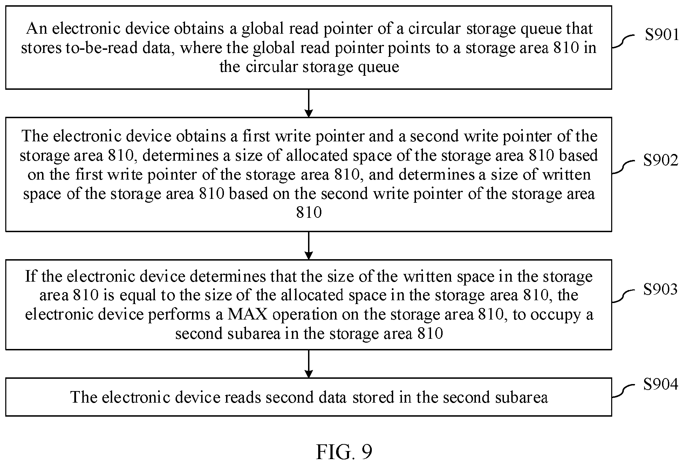

FIG. 9 is a schematic implementation flowchart of a data reading method according to an embodiment of this application. It should be understood that the data reading method may be executed by a thread, an operating system, or an electronic device on which an operating system is installed. Subsequently, the data reading method is described by using an example in which the data reading method is executed by an electronic device. In embodiments of this application, for descriptions of the circular storage queue, refer to related descriptions in FIG. 7A and FIG. 7B or FIG. 8. As shown in FIG. 9, the procedure includes the following steps S901 to S904.

S901: An electronic device obtains a global read pointer of a circular storage queue that stores to-be-read data, where the global read pointer points to a storage area 810 (used as an instance of a third storage area) in the circular storage queue.

In different scenarios, the to-be-read data may be different types of data. For example, in a scenario in which a kernel event is recorded in an operating system kernel that uses the circular storage queue, the to-be-read data is kernel event data. In a scenario in which a network adapter driver receives and sends a data packet, the to-be-read data is an input data packet. This is not limited in embodiments of this application.

In embodiments of this application, the electronic device may obtain the global read pointer from the queue head of the circular storage queue. The global read pointer points to the storage area 810. Specifically, the global read pointer may point to a start location of the storage area 810, and the start location may be a first byte of the storage area 810. In a data reading process, the electronic device reads data by using a subarea as a unit. For example, as shown in FIG. 8, the storage area 810 includes a subarea 811, a subarea 812, and a subarea 813. The electronic device allocates the subarea 811 to a thread 1, and allocates the subarea 812 to a thread 2. The thread 1 reads data in the 1st subarea 811, and the thread 2 reads data in the 2nd subarea 812.

S902: The electronic device obtains a first write pointer and a second write pointer of the storage area 810, determines a size of allocated space of the storage area 810 based on the first write pointer of the storage area 810, and determines a size of written space of the storage area 810 based on the second write pointer of the storage area 810.

In embodiments of this application, corresponding local metadata is stored in an area head of each storage area in the circular storage queue, and the local metadata includes a first write pointer allocated and a second write pointer committed. For descriptions of the local metadata, refer to related descriptions in FIG. 7A and FIG. 7B or FIG. 8.

It should be understood that, in embodiments of this application, the size of the allocated space in the storage area 810 includes only the size of the storage space that has been allocated to the electronic device in the last write rewind. The size of the written space in the storage area 810 includes only the size of written storage space in a last write rewind of the electronic device.

In embodiments of this application, an offset value and a version value in the first write pointer allocated/second write pointer committed change with an allocation operation/commit operation of allocating storage space by the electronic device in the storage area. For example, the storage area 810 includes the subarea 811, the subarea 812, and the subarea 813. When the storage area 810 is not allocated, both the offset value and the version value in the first write pointer of the storage area 810 may be 0. The electronic device allocates the subarea 811 to the thread 1. In this case, the offset value in the first write pointer of the storage area 810 changes to 1. The electronic device allocates the subarea 812 to the thread 2. In this case, the offset value in the first write pointer of the storage area 810 changes to 2. After writing data into the subarea 811, the thread 1 performs the commit operation. In this case, the offset value in the second write pointer of the storage area 810 changes to 1. After writing data into the subarea 812, the thread 2 performs the commit operation. In this case, the offset value in the second write pointer of the storage area 810 changes to 2.

S903: If the electronic device determines that the size of the written space in the storage area 810 is equal to the size of the allocated space in the storage area 810, the electronic device performs a MAX operation on the storage area 810, to occupy a second subarea in the storage area 810.

In embodiments of this application, the electronic device may determine a commit status of the storage area 810 based on the size of the written space in the storage area 810 and the size of the allocated space in the storage area 810. The commit status includes complete commit and incomplete commit. When the electronic device determines that the size of the written space in the storage area 810 is equal to the size of the allocated space in the storage area 810, the electronic device determines that the commit status of the storage area 810 is complete commit. When the electronic device determines that the size of the written space in the storage area 810 is not equal to the size of the allocated space in the storage area 810, the electronic device determines that the commit status of the storage area 810 is incomplete commit (that is, some subareas have been allocated but have not been committed). Before writing data into the storage area 810, the electronic device needs to allocate the storage space in the storage area 810 to one or more threads. It can be learned from the foregoing description that the electronic device cyclically writes data into the storage area 810. Therefore, the electronic device cyclically allocates the storage space in the third storage space to the thread. It should be understood that, in embodiments of this application, the size of the allocated space in the storage area 810 includes only the size of the space that has been allocated to the electronic device in the last write rewind. The size of the written space in the storage area 810 includes only the size of written data space in a last write rewind of the electronic device.

In embodiments of this application, if the electronic device determines that the commit status of the storage area 810 is complete commit, that is, determines that the storage area 810 is in a readable state, the electronic device performs the MAX operation on the storage area 810, to occupy the second subarea in the storage area 810. If the electronic device determines that the commit status of the storage area 810 is incomplete commit, that is, determines that the storage area 810 is in an unreadable state, the electronic device returns BUSY, and ends the procedure. In an embodiment, if the electronic device determines that the commit status of the storage area 810 is complete commit, the electronic device may further obtain a first read pointer reserved of the storage area 810, and determine a size of occupied space in the storage area 810 based on an offset value in the first read pointer reserved. When the electronic device determines that the size of the occupied space in the storage area 810 is less than the size of the written space in the storage area 810, the electronic device may determine that written subspace in the storage area 810 is not completely occupied. When the electronic device determines that the size of the occupied space in the storage area 810 is not less than the size of the written space in the storage area 810, the electronic device may determine that the written subspace in the storage area 810 is completely occupied. When the electronic device determines that the written subspace in the storage area 810 is not completely occupied, the electronic device occupies the second subarea in the storage area 810 by performing the MAX operation on the storage area 810. When the electronic device determines that the written subspace in the storage area 810 is completely occupied, the electronic device determines that no written data in the storage area 810 can be read. The electronic device returns EMPTY, and ends the process, or the electronic device updates the global read pointer.

It should be understood that, in embodiments of this application, the size of occupied space in the storage area 810 includes only the size of space occupied by the electronic device in a last read rewind. By determining whether the written subspace in the storage area 810 is completely occupied, it is ensured that the reader does not exceed the writer, and the reader does not read old data.

Specifically, the electronic device may increase the first read pointer of the storage area 810 by 1 by implementing the MAX operation, and determine whether the first read pointer of the storage area 810 is updated by another thread. If the first read pointer of the storage area 810 is not updated by the another thread, it is determined that the second subarea is occupied in the storage area 810. In actual application, the electronic device may perform an operation of adding 1 to the first read pointer of the storage area 810 by performing a MAX (blk.reserved,reversed+1) operation, to perform an occupation operation of the subarea. If the MAX operation is successfully performed, it indicates that the electronic device updates the first read pointer of the storage area 810. blk.reserved indicates a re-obtained current first read pointer of the storage area 810, and reversed indicates the first read pointer obtained in step S902.

In embodiments of this application, because there may be a plurality of threads that simultaneously read data, the electronic device needs to separately perform the MAX operation on the storage area 810, to occupy a subarea for each thread. To avoid a case in which all subareas that have been written in the storage area 810 are allocated because MAX operations are performed at the same time, the electronic device may compare a re-obtained current first read pointer of the storage area 810 with the first read pointer obtained in step S902. If it is determined that the re-obtained current first read pointer of the storage area 810 is the same as the first read pointer obtained in step S902, the electronic device determines that the first read pointer of the storage area 810 is not updated by the another thread, and performs the MAX operation successfully, that is, determines that the second subarea is successfully occupied in the storage area 810. The electronic device returns information about the second subarea occupied in the storage area 810. If it is determined that the re-obtained current first read pointer of the storage area 810 is different from the first read pointer obtained in step S902, the electronic device determines that the first read pointer of the storage area 810 has been updated by the another thread, and fails to perform the MAX operation. The electronic device determines that the subarea in the storage area 810 has been occupied for another thread, and the electronic device needs to re-occupy the subarea. In other words, the electronic device returns to step S901.

In actual application, each subarea may further include a corresponding metadata offset, and the metadata offset is used to indicate a location of the subarea in a corresponding storage area. Information EntryDesc that is about the occupied subarea in the storage area 810 and that is returned by the electronic device includes three parts: block, offset, and version. A block value indicates a storage area (that is, the storage area 810) in which the occupied subarea is located, an offset value indicates a location of the occupied subarea in a corresponding storage area, and a version value is used to check data consistency when the current data write mode is a drop-old mode (as an instance of the second mode).

It should be understood that the electronic device determines whether the first read pointer of the storage area 810 has been updated by the another thread, to avoid a problem of data overflow and a performance loss when performing an occupation operation when the plurality of threads read data, even if a size of occupied space in the storage area 810 is greater than or equal to a size of written space in the storage area 810.

S904: The electronic device reads second data stored in the second subarea.

In embodiments of this application, data is read based on an occupy-read data-consume procedure. After determining that the second subarea is successfully occupied in the storage area 810, the electronic device reads the second data stored in the second subarea, and performs a consume operation, to complete data reading.

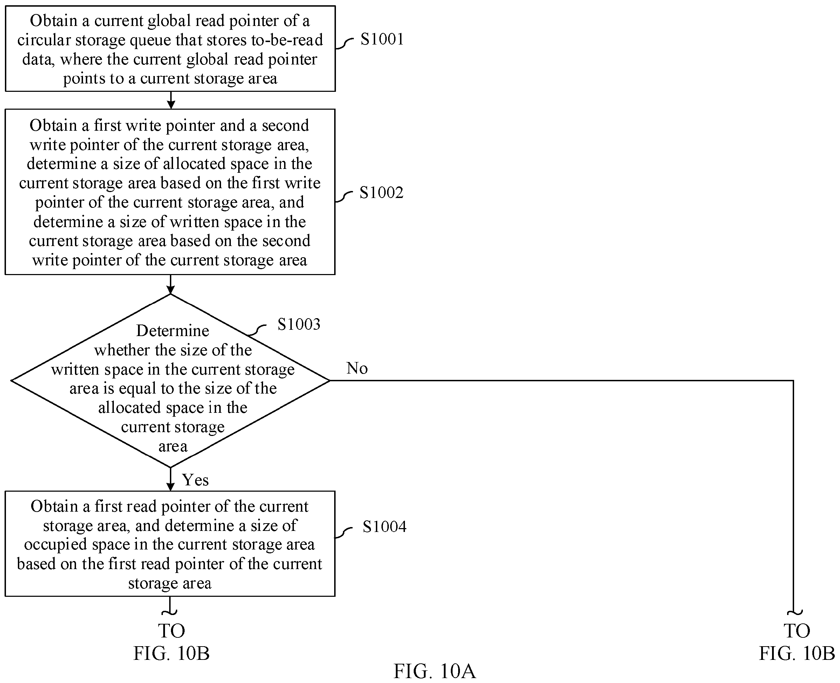

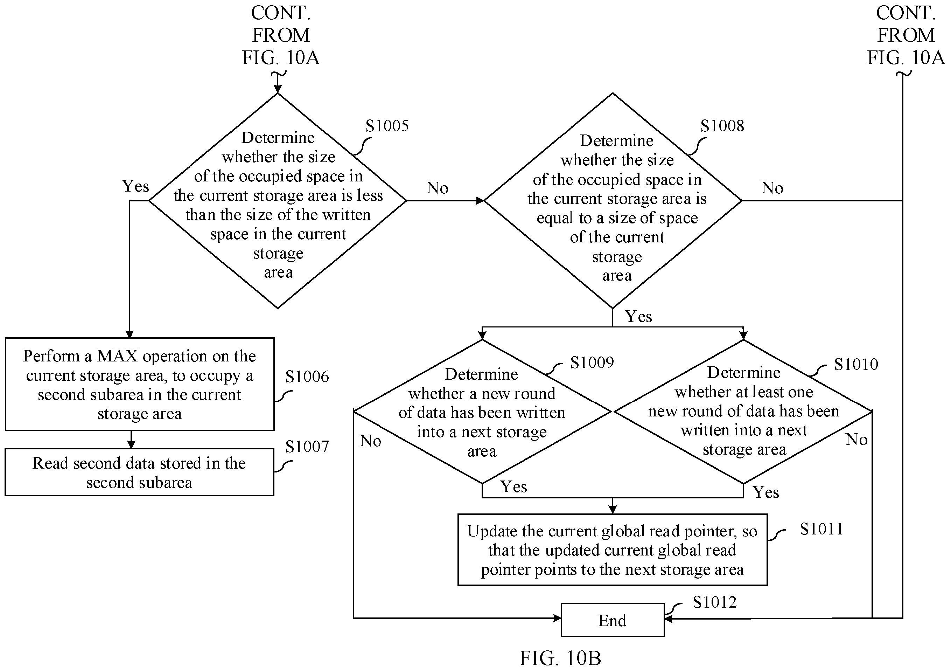

In an embodiment of this application, refer to FIG. 10A and FIG. 10B. FIG. 10A and FIG. 10B are a schematic implementation flowchart of a data reading method according to another embodiment of this application. As shown in FIG. 10A and FIG. 10B, the procedure includes the following steps S1001 to S1012.

S1001: An electronic device obtains a current global read pointer of a circular storage queue that stores to-be-read data, where the current global read pointer points to a current storage area.

In embodiments of this application, the electronic device may obtain the current global read pointer from a queue head of the circular storage queue. For descriptions of the circular storage queue, refer to the related descriptions in FIG. 7A and FIG. 7B or FIG. 8. The electronic device obtains the current global read pointer of the circular storage queue, where the current global read pointer is also referred to as the current global read pointer, the current global read pointer points to the storage area 810 (used as an instance of the third storage area) in the circular storage queue, and the storage area 810 is also referred to as a current storage area.

S1002: The electronic device obtains a first write pointer and a second write pointer of the current storage area, determines a size of allocated space in the current storage area based on the first write pointer of the current storage area, and determines a size of written space in the current storage area based on the second write pointer of the current storage area.

In embodiments of this application, the electronic device may obtain the first write pointer and the second write pointer from an area head of the current storage area. For descriptions of the current storage area, refer to the related descriptions in FIG. 7A and FIG. 7B or FIG. 8.

S1003: The electronic device determines whether the size of the written space in the current storage area is equal to the size of the allocated space in the current storage area.

In embodiments of this application, when determining that the size of the written space in the current storage area is equal to the size of the allocated space in the current storage area, the electronic device determines whether a commit status of the current storage area is complete commit. When determining that the size of the written space in the current storage area is not equal to the size of the allocated space in the current storage area, the electronic device determines whether the commit status of the current storage area is incomplete commit. If the electronic device determines that the commit status of the current storage area is complete commit, that is, determines that the current storage area is in a readable state, the electronic device performs step S1004. If the electronic device determines that the commit status of the current storage area is incomplete commit, that is, determines that the current storage area is in an unreadable state, the electronic device returns BUSY, and performs step S1012.

S1004: The electronic device obtains a first read pointer of the current storage area, and determines a size of occupied space in the current storage area based on the first read pointer of the current storage area.

In embodiments of this application, the electronic device may obtain the first read pointer from the area head of the current storage area. For descriptions of the current storage area, refer to related descriptions in FIG. 7A and FIG. 7B or FIG. 8.

S1005. The electronic device determines whether the size of the occupied space in the current storage area is less than the size of the written space in the current storage area.

In embodiments of this application, when determining that the size of the occupied space in the current storage area is less than the size of the written space in the current storage area, the electronic device may determine that the written subspace in the current storage area is not completely occupied. When determining that the size of the occupied space in the current storage area is not less than the size of the written space in the current storage area, the electronic device may determine that the written subspace in the current storage area is completely occupied. When the electronic device determines that the written subspace in the current storage area is not completely occupied, the electronic device performs step S1006. When the electronic device determines that the written subspace in the current storage area is completely occupied, the electronic device performs step S1008.

S1006: In a case in which it is determined that the written subspace in the current storage area is not completely occupied, the electronic device performs a MAX operation on the current storage area, to occupy a second subarea in the current storage area.

S1007: The electronic device reads second data stored in the second subarea.

For specific content in step S1001 to step S1007, refer to related descriptions in the embodiment shown in FIG. 9. Details are not described again in embodiments of this application.

In an embodiment, when the current data write mode is a drop-old mode (as an instance of the second mode), when reading in a next storage area in a previous round is not completed, overwrite data may be directly written. Therefore, when the current data write mode is the drop-old mode, after reading the second data stored in the second subarea, the electronic device may determine whether the second subarea is rewritten. If the electronic device determines that the second subarea is not rewritten, the electronic device returns the second data stored in the second subarea. If the electronic device determines that the second subarea is rewritten, the electronic device does not return the second data, returns a null value, and returns to step S1001.

Specifically, when determining that the current data write mode is the drop-old mode, the electronic device may determine, based on a version value in a first write pointer allocated of the current storage area, a quantity of allocated local write rewind times in the current storage area, and determine, based on a version value in a first read pointer reserved of the current storage area, a quantity of occupied local read rewind times in the current storage area. When the quantity of allocated local write rewind times in the current storage area is equal to the quantity of occupied local read rewind times in the current storage area, the electronic device may determine that the second subarea is not overwritten. When the quantity of allocated local write rewind times in the current storage area is not equal to the quantity of occupied local read rewind times in the current storage area, the electronic device may determine that the second subarea is overwritten.

In actual application, when occupying the second subarea in the current storage area, the electronic device may store, in a version corresponding to the second subarea, a version value in a first read pointer reserved of the current storage area, and compare the stored version value corresponding to the second subarea with a version value in the first write pointer allocated of the current storage area. If the stored version value corresponding to the second subarea is the same as the version value in the first write pointer allocated of the current storage area, the electronic device determines that the second subarea is not rewritten. If the stored version value corresponding to the second subarea is not the same as the version value in the first write pointer allocated of the current storage area, the electronic device determines that the second subarea is rewritten.

It should be understood that, in embodiments of this application, a reader first reads data from the circular storage queue, and then determines, by comparing the version value in the first write pointer allocated in the current storage area with the version value corresponding to the second subarea, whether the second subarea is overwritten. If the second subarea is overwritten, the reader reads the second subarea again. According to the method provided in embodiments of this application, speculative read can be easily implemented, and a case in which data is discontinuously stored at a tail does not need to be considered, thereby reducing a cache miss rate and improving overall system performance.

S1008: The electronic device determines whether the size of the occupied space in the current storage area is equal to the size of the space of the current storage area.

In embodiments of this application, when determining that the written subspace in the current storage area is completely occupied, the electronic device may determine whether the size of the occupied space in the current storage area is equal to the size of the space of the current storage area. In this way, it is determined whether the current storage area is completely occupied (that is, all subareas in the current storage area have been written and completely occupied).

In an embodiment, global metadata of the circular storage queue may further include a size of space of each storage area, and the electronic device may read the size of the space of the current storage area from a queue head of the circular storage queue. Alternatively, local metadata of each storage area of the circular storage queue may further include a corresponding space size, and the electronic device may read the size of the space of the current storage area from an area head of the current storage area. It should be understood that the size of the space of the current storage area may be preset based on a requirement. This is not limited in embodiments of this application. In embodiments of this application, if determining that the size of the occupied space in the current storage area is equal to the size of the space of the current storage area, the electronic device determines that the current storage area is completely occupied. If determining that the size of the occupied space in the current storage area is not equal to the size of the space of the current storage area, the electronic device determines that the current storage area is not completely occupied. When the electronic device determines that the current storage area is completely occupied, the electronic device determines that the global read pointer needs to be updated, and the electronic device performs step S 1009 or step S 1010. When the electronic device determines that the current storage area is not completely occupied, it indicates that the written subspace in the current storage area is completely occupied, but there is still subspace that is not allocated. In this case, the electronic device may determine that no data in the current storage area can be read. In this case, the electronic device returns EMPTY, and performs step S1012.

S 1009: The electronic device determines whether a new round of data has been written into a next storage area.

The next storage area is a next storage area logically adjacent to the current storage area, that is, a next storage area that is adjacent to the current storage area in a logical direction. For example, in FIG. 8, if the current storage area is the storage area 830, the next storage area is the storage area 810 adjacent to the storage area 830. When the electronic device determines that the current storage area is completely occupied and the global read pointer needs to be updated, the electronic device may determine the current data write mode. If the current data write mode is a retry-new mode (used as an instance of the first mode), when a new round of data has been written into the next storage area, the electronic device determines that the status of the next storage area is a readable state. When no new round of data has been written into the next storage area, or more rounds of data have been written into the next storage area, the electronic device determines that the status of the next storage area is an unreadable state. If the electronic device determines that the status of the next storage area is the readable state, the electronic device determines that the current global read pointer can be updated, and the electronic device performs step S1011. If the electronic device determines that the status of the next storage area is the unreadable state, the electronic device does not update the current global read pointer, and performs step S1012.

Specifically, when determining that the current data write mode is the retry-new mode, the electronic device may obtain a second write pointer committed of the next storage area, and determines, based on a version value in the second write pointer committed of the next storage area, a quantity of written local write rewind times in the next storage area. The electronic device determines the quantity of global read rewind times based on the global read pointer. When the quantity of written local write rewind times in the next storage area is equal to the quantity of global read rewind times plus 1, the electronic device may determine that a new round of data has been written into the next storage area, and the status of the next storage area is the readable state. In this case, the electronic device performs step S1011. When the quantity of written local write rewind times in the next storage area is less than the quantity of global read rewind times plus 1, the electronic device determines that no new data has been written into the next storage area. In this case, the electronic device returns EMPTY, and performs step S1012. When the quantity of written local write rewind times in the next storage area is greater than the quantity of global read rewind times plus 1, the electronic device determines that an exception occurs, and performs step S1012.

S1010: The electronic device determines whether at least one new round of data has been written into a next storage area.

In embodiments of this application, if the current data write mode is a drop-old mode (used as an instance of the second mode), when at least one new round of data has been written into the next storage area, the electronic device determines that the status of the next storage area is the readable state, the current global read pointer may be updated. If the electronic device determines that the status of the next storage area is not the readable state, the current global read pointer is not updated. Specifically, when determining that the current data write mode is the drop-old mode, the electronic device may determine the quantity of occupied local read rewind times in the current storage area based on the version value in the first read pointer reserved of the current storage area, and determine a corresponding target increment value based on a location of the current storage area. The electronic device may further obtain a second write pointer committed of the next storage area, and determine, based on a version value in the second write pointer committed of the next storage area, a quantity of written local write rewind times in the next storage area. When the electronic device determines that the quantity of written local write rewind times in the next storage area is greater than or equal to a sum of the quantity of occupied local read rewind times in the current storage area and the target increment, the electronic device may determine that at least one new round of data has been written into the next storage area, and the status of the next storage area is the readable state. In this case the electronic device performs step S1011. When determining that the quantity of written local write rewind times in the next storage area is less than the sum of the quantity of occupied local read rewind times in the current storage area and the target increment, the electronic device may determine that no new data is written into the next storage area. In this case, the electronic device returns EMPTY, and performs step S1012.

When the current storage area is the 1st storage area in the circular storage queue, a target increment value corresponding to the current storage area may be set to 1. When the current storage area is not the 1st storage area in the circular storage queue, the target increment value corresponding to the current storage area may be set to 0.

In an actual application, when data is written into/read from the 1st storage area in an initial case, the electronic device does not update the global write pointer/global read pointer. Therefore, in a first read/write rewind, a version value of the 1st storage area is 0. When data is written into/read from another storage area, the version value of the another storage areas is 1. It can be learned that even in a same rewind, a difference between the version value of the 1st storage area and the version value of the another storage area is 1. Therefore, a special case of the 1st storage area needs to be considered herein. When the current storage area is the first storage area, a corresponding quantity of occupied local read rewind times is increased by 1.

S1011: The electronic device updates the current global read pointer, so that the updated current global read pointer points to the next storage area.

In embodiments of this application, the electronic device may perform a MAX operation on the current global read pointer, to update the current global read pointer, so that the current global read pointer points to the next storage area.

In embodiments of this application, when the electronic device determines that the current data write mode is the retry-new mode, before updating the current global read pointer, the electronic device may perform the MAX operation on the first read pointer and the second read pointer of the next storage area, to increase the first read pointer and the second read pointer of the next storage area by 1.

In embodiments of this application, when the electronic device determines that the current data write mode is the drop-old mode, before updating the current global read pointer, the electronic device may perform the MAX operation on the next storage area, to set the quantity of occupied local read rewind times in the next storage area to the quantity of written local write rewind times in the next storage area. Specifically, the electronic device may perform the MAX operation on a version value in the first read pointer reserved of the next storage area, to assign a version value in the second write pointer committed of the next storage area to a version in the first read pointer reserved of the next storage area.

In an actual application, because overwrite may be performed in the drop-old mode, the version value in the second write pointer committed may be much greater than the version value in the first read pointer reserved.

S1012: End. The end may mean that the current thread in the electronic device abandons reading data, or the current thread in the electronic device returns to step S1001.

In embodiments of this application, after performing step S1011, the electronic device may return to step S1001. In this case, the current global read pointer points to the next storage area, and the next storage area may be used as the current storage area, to occupy the second subarea in the next storage area and read the second data stored in the second subarea, to complete data reading.

It should be noted that, in some embodiments, all parts implemented by using the MAX operation in the foregoing method may be replaced with parts implemented by using a CAS operation. For example, on a hardware platform without a MAX instruction, namely, an X86 platform, a CAS instruction may be used instead.

It should be understood that, for ease of description, in the flowcharts in FIG. 7A and FIG. 7B and FIG. 10A and FIG. 10B, the current global write pointer, the current global read pointer, the current storage area, the next storage area, and the like are used for description. In an actual application, "current" may be modified as a description such as "first", "second", or "third". For example, the current storage area may be a first storage area, a third storage area, or the like.

It should be understood that, in the foregoing description of FIG. 7A and FIG. 7B, the current global write pointer corresponds to the current storage area. In the foregoing description of FIG. 10A and FIG. 10B, the current global read pointer corresponds to the current storage area. Two current storage areas may be a same storage area, or may not be a same storage area.

It should be understood that FIG. 5 and FIG. 7A and FIG. 7B are flowcharts of the data writing method, and FIG. 9 and FIG. 10A and FIG. 10B are flowcharts of the data reading method. In a circular storage queue, data writing and data reading are associated with each other. Therefore, for descriptions in FIG. 9 and FIG. 10A and FIG. 10B, refer to descriptions in FIG. 5 and FIG. 7A and FIG. 7B. For descriptions in FIG. 5 and FIG. 7A and FIG. 7B, refer to descriptions in FIG. 9 and FIG. 10A and FIG. 10B.

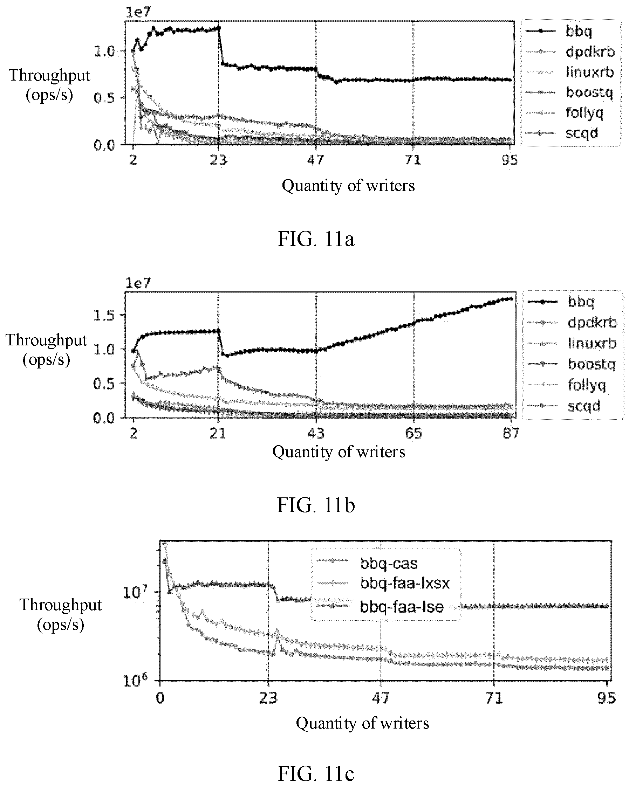

The method provided in embodiments of this application is separately applied to an ARM platform and the X86 platform, and is compared with an implementation method in the conventional technology in states of different quantities of writers, to obtain performance comparison diagrams shown in FIG. 11a and FIG. 11b. bbq represents a throughput change curve of the method provided in embodiments of this application. dpdkrb represents a throughput change curve of an implementation method in a DPDK. linuxrb represents a throughput change curve of an implementation method in a Linux system. boostq represents a throughput change curve of an implementation method in a boost library. follyq represents a throughput change curve of an implementation method provided by the Facebook (Meta) company. scqd represents a throughput change curve of an implementation method in the foregoing implementation 2. It can be learned from FIG. 11a and FIG. 11b that, on the X86 platform and the ARM platform, a throughput of the method provided in embodiments of this application is obviously higher than a throughput of the implementation method in the conventional technology, and the method provided in embodiments of this application can improve system performance by dozens of times.

On the ARM platform, an FAA instruction and a CAS instruction are separately used to implement the method provided in embodiments of this application, and comparison is performed in states of different quantities of writers, to obtain a performance comparison diagram shown in FIG. 11c. bbq-faa-lse represents a throughput change curve when an ARM LSE instruction set FAA instruction is used for implementation, and bbq-cas represents a throughput change curve when the CAS instruction is used for implementation. It can be learned from FIG. 11c that when there are a large quantity of writers, performance of an implementation by using the CAS instruction can be more than five times that of an implementation by using the CAS instruction by using an ARM LSE instruction set FAA instruction.

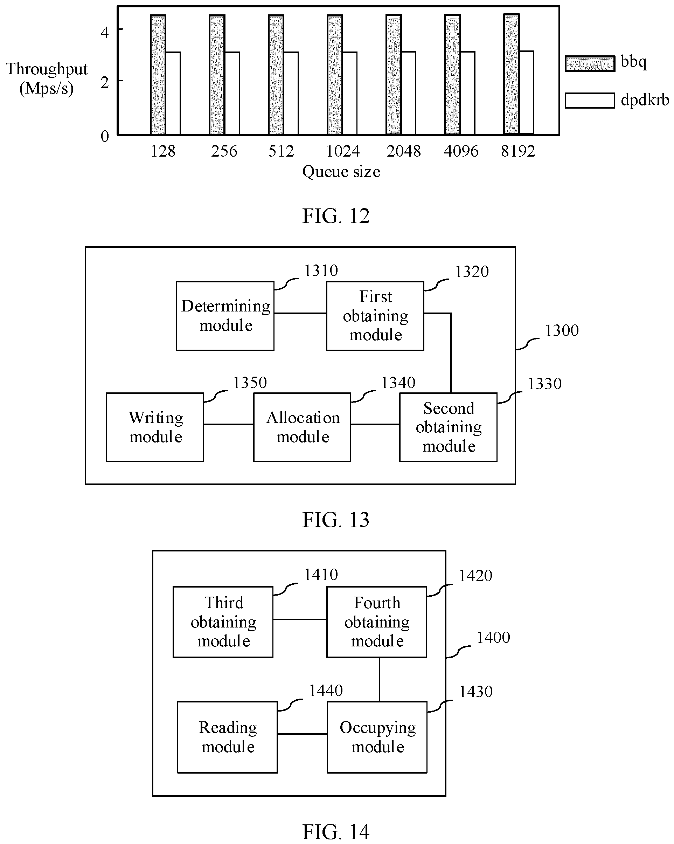

Performance of the circular storage queue provided in embodiments of this application is compared with performance of a circular storage queue ring buffer in the DPDK, to obtain a performance comparison diagram shown in FIG. 12. bbq represents throughputs of the circular storage queue provided in embodiments of this application when different queue sizes are used, and dpdkrb represents throughputs of the circular storage queue in the DPDK when different queue sizes are used. It can be learned from FIG. 12 that, in an L2F scenario, performance of the circular storage queue provided in embodiments of this application is at least 50% better than end-to-end performance of the circular storage queue in the DPDK.

The foregoing describes the data writing method and the data reading method in this application, and the following describes a data writing apparatus and a data reading apparatus in this application.

FIG. 13 is a diagram of a structure of a data writing apparatus 1300 according to an embodiment of this application. As shown in FIG. 13, the data writing apparatus 1300 may include:

a determining module 1310, configured to determine first data to be written into a circular storage queue;
a first obtaining module 1320, configured to obtain a global write pointer of the circular storage queue, where the circular storage queue includes a plurality of storage areas, each storage area includes a plurality of subareas, and the global write pointer points to a first storage area of the plurality of storage areas;
a second obtaining module 1330, configured to obtain a first write pointer of the first storage area, and determine a size of allocated space in the first storage area based on the first write pointer of the first storage area;
an allocation module 1340, configured to: if it is determined that the size of the allocated space in the first storage area is less than a size of space of the first storage area, perform an FAA operation on the first storage area, to allocate a first subarea in the first storage area; and
a writing module 1350, configured to write the first data into the first subarea.

In some embodiments, the data writing apparatus 1300 may further include a first update module, configured to: determine that the size of the allocated space in the first storage area is equal to the size of the space of the first storage area; determine that a status of a second storage area is a writable state, where the second storage area is a next storage area adjacent to the first storage area; and update the global write pointer, so that the updated global write pointer points to the second storage area.

FIG. 14 is a diagram of a structure of a data reading apparatus 1400 according to an embodiment of this application. As shown in FIG. 14, the data reading apparatus 1400 may include:

a third obtaining module 1410, configured to obtain a global read pointer of a circular storage queue that stores to-be-read data, where the circular storage queue includes a plurality of storage areas, each storage area includes a plurality of subareas, and the global read pointer points to a third storage area of the plurality of storage areas;

a fourth obtaining module 1420, configured to obtain a first write pointer and a second write pointer of the third storage area, determine a size of allocated space in the third storage area based on the first write pointer of the third storage area, and determine a size of written space in the third storage area based on the second write pointer of the third storage area;

an occupying module 1430, configured to: if it is determined that the size of the written space in the third storage area is equal to the size of the allocated space in the third storage area, perform a MAX operation on the third storage area, to occupy a second subarea in the third storage area; and

a reading module 1440, configured to read second data stored in the second subarea.

In some embodiments, the occupying module 1430 is further configured to determine that the size of the occupied space in the third storage area is less than the size of the written space in the third storage area, where the size of the occupied space in the third storage area is determined based on the first read pointer of the third storage area.

In some embodiments, the data reading apparatus 1400 may further include a second update module, configured to: determine that the size of the occupied space in the third storage area is equal to the size of the space of the third storage area; determine that a status of a fourth storage area is a readable state, where the fourth storage area is a next storage area adjacent to the third storage area; and update the global read pointer, so that the updated global read pointer points to the fourth storage area.

In some embodiments, the data reading apparatus 1400 may further include setting module, configured to perform a MAX operation on the fourth storage area, to set the quantity of occupied local read rewind times in the fourth storage area to the quantity of written local write rewind times in the fourth storage area.

It should be noted that when the apparatus provided in the foregoing embodiment implements functions of the apparatus, division of the foregoing functional modules is only used as an example for description. In actual application, the foregoing functions may be allocated to different functional modules for implementation as required, that is, an internal structure of a device is divided into different functional modules, to implement all or some of the functions described above. In addition, the apparatus provided in the foregoing embodiment and the corresponding method embodiment belong to a same concept. For a specific implementation process, refer to the corresponding method embodiment. Details are not described herein again.

Embodiments of this application further provide an electronic device, including:

a memory, configured to store instructions for execution by one or more processors of the electronic device; and
a processor, where when the processor executes the instructions in the memory, the electronic device may be enabled to perform the methods shown in FIG. 5 to FIG. 10A and FIG. 10B in the foregoing embodiments.

Embodiments of this application further provide a computer-readable storage medium. The computer-readable storage medium stores instructions. When the instructions are run by a processor, the processor is enabled to perform the methods shown in FIG. 5 to FIG. 10A and FIG. 10B in the foregoing embodiments.

This application further provides a computer program product including instructions. When the computer program product runs on an electronic device, a processor is enabled to perform the methods shown in FIG. 5 to FIG. 10A and FIG. 10B in the foregoing embodiments.

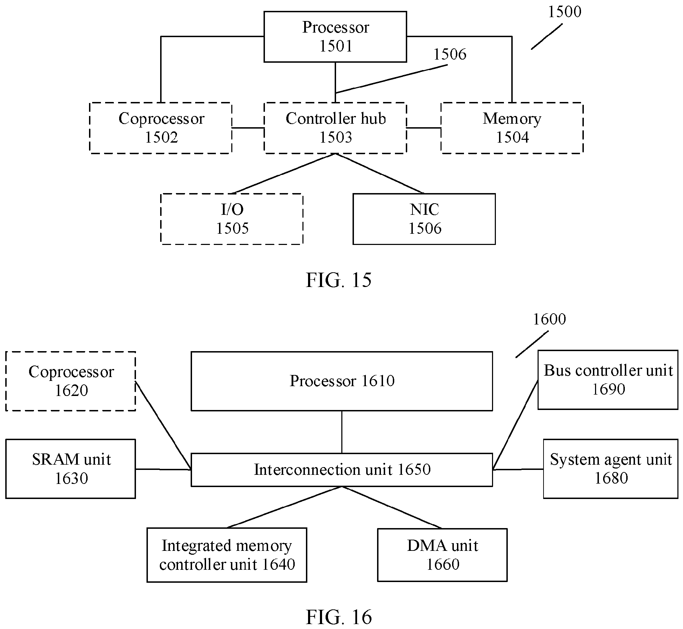

FIG. 15 is a block diagram of an electronic device 1500 according to an embodiment of this application. The electronic device 1500 may include one or more processors 1501 coupled to a controller hub 1503. For at least one embodiment, the controller hub 1503 communicates with the processor 1501 via a multi-branch bus such as a front side bus (front side Bus, FSB), a point-to-point interface such as a quick path interconnect (quick path interconnect, QPI), or a similar connection 1506. The processor 1501 executes instructions for controlling a data processing operation of a general type. In an embodiment, the controller hub 1503 includes but is not limited to a graphics memory controller hub (graphics memory controller hub, GMCH) (not shown) and an input/output hub (input output hub, IOH) (the input/output hub may be on separate chips) (not shown). The GMCH includes a memory and a graphics controller, and is coupled to the IOH.

The electronic device 1500 may further include a coprocessor 1502 and a memory 1504 coupled to the controller hub 1503. Alternatively, one or both of the memory and the GMCH may be integrated into the processor (as described in this application). The memory 1504 and the coprocessor 1502 are directly coupled to the processor 1501 and the controller hub 1503. The controller hub 1503 and the IOH are located in a single chip.

The memory 1504 may be, for example, a dynamic random access memory (dynamic random access memory, DRAM), a phase change memory (phase change memory, PCM), or a combination thereof. As a computer-readable storage medium, the memory 1504 may include one or more tangible and non-transitory computer-readable media configured to store data and/or instructions. For example, the memory 1504 may include any proper nonvolatile memory such as a flash memory and/or any proper nonvolatile storage device such as one or more hard disk drives (hard-disk drive, HDD(s)), one or more compact disc (compact disc, CD) drives, and/or one or more digital versatile disc (digital versatile disc, DVD) drives.

According to some embodiments of this application, the memory 1504 used as the computer-readable storage medium stores instructions. When the instructions are executed on a computer, the system 1500 performs the data writing method or the data reading method in the foregoing embodiments. For details, refer to the methods shown in FIG. 5 to FIG. 10A and FIG. 10B in the foregoing embodiments. Details are not described herein again.

In an embodiment, the coprocessor 1502 is a dedicated processor, for example, a high-throughput many integrated core (many integrated core, MIC) processor, a network or communication processor, a compression engine, a graphics processor, a general purpose graphics processing unit (general purpose computing on GPU, GPGPU), or an embedded processor. Optional properties of the coprocessor 1502 are represented by dashed lines in FIG. 15.

In an embodiment, the electronic device 1500 may further include a network interface (network interface controller, NIC) 1506. The network interface 1506 may include a transceiver, configured to provide a radio interface for the electronic device 1500, to communicate with any another suitable device (such as a front-end module or an antenna). In various embodiments, the network interface 1506 may be integrated with another component of the electronic device 1500. The network interface 1506 may implement a function of a communication unit in the foregoing embodiments.

The electronic device 1500 may further include an input/output (input/output, I/O) device 1505. The I/O 1505 may include: a user interface, where this design enables a user to interact with the electronic device 1500; a peripheral component interface, where this design enables the peripheral component to interact with the electronic device 1500; and/or a sensor, where this sensor is configured to determine an environmental condition and/or location information related to the electronic device 1500.

It should be noted that FIG. 15 is merely an example. To be specific, although FIG. 15 shows that the electronic device 1500 includes a plurality of components such as the processor 1501, the controller hub 1503, and the memory 1504, in actual application, a device using the methods in this application may include only some of the components of the electronic device 1500, for example, may only include the processor 1501 and the network interface 1506. A property of an optional component is shown by a dashed line in FIG. 15.

FIG. 16 is a block diagram of an SoC (system on chip, system on chip) 1600 according to an embodiment of this application. In FIG. 16, similar components have same reference numerals. In addition, a dashed box is an optional feature of a more advanced SoC. In FIG. 16, an SoC 1600 includes: an interconnection unit 1650 coupled to a processor 1610; a system agent unit 1680; a bus controller unit 1690; an integrated memory controller unit 1640; one or more coprocessors 1620, including integrated graphics logic, an image processor, an audio processor, and a video processor; a static random access memory (static random access memory, SRAM) unit 1630; and a direct memory access (direct memory access, DMA) unit 1660. In an embodiment, the coprocessor 1620 includes a dedicated processor, for example, a network or communication processor, a compression engine, a GPGPU, a high throughput MIC processor, or an embedded processor.

The static random access memory (SRAM) unit 1630 may include one or more tangible and non-transitory computer-readable storage media that are configured to store data and/or instructions. The computer-readable storage medium may store instructions. Specifically, temporary and permanent copies of these instructions are stored. The instructions may include: when being executed by at least one unit in the processor, enabling the SoC 1600 to perform the data writing method or the data reading method in the foregoing embodiments. For details, refer to the methods shown in FIG. 5 to FIG. 10A and FIG. 10B in the foregoing embodiments. Details are not described herein again.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code may be applied to input instructions to perform the functions described in this application and generate output information. The output information may be applied to one or more output devices in a known manner. For a purpose of this application, a processing system includes any system that has a processor such as a digital signal processor (digital signal processor, DSP), a microcontroller, an application specific integrated circuit (application specific integrated circuit, ASIC), or a microprocessor.

The program code may be implemented in a high-level programming language or an object-oriented programming language to communicate with the processing system. The program code can also be implemented in an assembly language or a machine language when needed. The mechanisms described in this application are not limited to the scope of any particular programming language. In either case, the language may be a compiled language or an interpreted language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed through a network or another computer-readable medium. Therefore, the machine-readable medium may include any mechanism of storing or transmitting information in a machine (namely, computer)-readable form, including but not limited to a floppy disk, a compact disc, an optical disc, a compact disc read-only memory (Compact Disc Read Only Memory, CD-ROMs), a magneto-optical disk, a read-only memory (Read Only Memory, ROM), a random access memory (RAM), an erasable programmable read only memory (Erasable Programmable Read Only Memory, EPROM), an electrically erasable programmable read-only memory (Electrically Erasable Programmable Read Only Memory, EEPROM), a magnetic card or an optical card, a flash memory, or a tangible machine-readable memory that transmits information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting an electronic instruction or information in a machine (namely, computer)-readable form.

In the accompanying drawings, some structural or method features may be shown in a particular arrangement and/or order. However, it should be understood that such a particular arrangement and/or order may not be needed. Instead, in some embodiments, the features may be arranged in a manner and/or sequence different from that shown in the accompanying drawings of the specification. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. **In** addition, to highlight an innovative part of this application, a unit/module that is not closely related to resolving the technical problem provided in this application

tion is not introduced in the foregoing device embodiments of this application. This does not mean that there are no other units/modules in the foregoing device embodiments.

It should be noted that: **In** the examples and specification of this application, relational terms such as first and second are merely used to distinguish one entity or operation from another, and do not necessarily require or imply any such actual relationship or order between these entities or operations. Moreover, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element. Although this application has been illustrated and described with reference to some preferred embodiments of this application, a person of ordinary skill in the art should understand that various changes may be made to this application in form and detail without departing from the spirit and scope of this application.

**Claims**

1. A data writing method, applied to an electronic device, wherein the method comprises:

   determining first data to be written into a circular storage queue;
   obtaining a global write pointer of the circular storage queue, wherein the circular storage queue comprises a plurality of storage areas, each storage area comprises a plurality of subareas, and the global write pointer points to a first storage area of the plurality of storage areas;
   obtaining a first write pointer of the first storage area, and determining a size of allocated space in the first storage area based on the first write pointer of the first storage area;
   if it is determined that the size of the allocated space in the first storage area is less than a size of space of the first storage area, performing an FAA operation on the first storage area, to allocate a first subarea in the first storage area; and
   writing the first data into the first subarea.

2. The method according to claim 1, wherein the method further comprises:

   determining that the size of the allocated space in the first storage area is equal to the size of the space of the first storage area, and determining that a status of a second storage area is a writable state, wherein the second storage area is a next storage area adjacent to the first storage area; and

updating the global write pointer, so that the updated global write pointer points to the second storage area.

3. The method according to claim 2, wherein the determining that a status of a second storage area is a writable state comprises:

determining that the second storage area is in an unallocated state.

4. The method according to claim 2, wherein the determining that a status of a second storage area is a writable state comprises:

determining that a size of read space in the second storage area is equal to a size of space of the second storage area; and

determining that a quantity of read local read rewind times in the second storage area is equal to a quantity of global write rewind times, wherein

the quantity of global write rewind times is determined based on the global write pointer; and the size of the read space in the second storage area and the quantity of read local read rewind times are determined based on a second read pointer of the second storage area, wherein the second read pointer of the second storage area is obtained when a current data write mode is a first mode.

5. The method according to claim 2, wherein the determining that a status of a second storage area is a writable state comprises:

determining that a size of written space in the second storage area is equal to a size of space of the second storage area; and

determining that a quantity of written local write rewind times in the second storage area is equal to a quantity of global write rewind times, wherein

the quantity of global write rewind times is determined based on the global write pointer; and the size of the written space in the second storage area and the quantity of written local write rewind times are determined based on a second write pointer of the second storage area, wherein the second write pointer of the second storage area is obtained when a current data write mode is a second mode.

6. A data reading method, applied to an electronic device, wherein the method comprises:

obtaining a global read pointer of a circular storage queue that stores to-be-read data, wherein the circular storage queue comprises a plurality of storage areas, each storage area comprises a plurality of subareas, and the global read pointer points to a third storage area of the plurality of storage areas;

obtaining a first write pointer and a second write pointer of the third storage area, determining a size of allocated space in the third storage area based on the first write pointer of the third storage area, and determining a size of written space in the third storage area based on the second write pointer of the third storage area;

if it is determined that the size of the written space in the third storage area is equal to the size of the allocated space in the third storage area, performing a MAX operation on the third storage area, to occupy a second subarea in the third storage area; and

reading second data stored in the second subarea.

7. The method according to claim 6, wherein before the performing a MAX operation on the third storage area, to occupy a second subarea in the third storage area, the method further comprises:

determining that a size of occupied space in the third storage area is less than the size of the written space in the third storage area, wherein the size of the occupied space in the third storage area is determined based on a first read pointer of the third storage area.

8. The method according to claim 7, wherein the performing a MAX operation on the third storage area, to occupy a second subarea in the third storage area comprises:

adding 1 to the first read pointer of the third storage area by performing the MAX operation, and determining whether the first read pointer of the third storage area is updated by another thread; and

if the first read pointer of the third storage area is not updated by the another thread, occupying the second subarea in the third storage area.

9. The method according to claim 7, wherein the reading second data stored in the second subarea comprises:

if it is determined that a current data write mode is a second mode, and a quantity of allocated local write rewind times in the third storage area is equal to a quantity of occupied local read rewind times in the third storage area, reading and returning the second data stored in the second subarea, wherein

the quantity of allocated local write rewind times in the third storage area is determined based on the first write pointer of the third storage area, and the quantity of occupied local read rewind times in the third storage area is determined based on the first read pointer of the third storage area.

10. The method according to claim 7, wherein the method further comprises:

determining that the size of the occupied space in the third storage area is equal to a size of space of the third storage area, and determining that a status of a fourth storage area is a readable state, wherein the fourth storage area is a next storage area adjacent to the third storage area; and

updating the global read pointer, so that the updated global read pointer points to the fourth storage area.

11. The method according to claim 10, wherein the determining that a status of a fourth storage area is a readable state comprises:

determining that a quantity of written local write rewind times in the fourth storage area is equal to the quantity of global read rewind times plus 1, wherein

the quantity of global read rewind times is determined based on the global read pointer; and the quantity of written local write rewind times in the fourth storage area is determined based on a second write pointer of the fourth storage area, wherein the second write pointer of the fourth storage area is obtained when a current data write mode is a first mode.

12. The method according to claim 10, wherein the determining that a status of a fourth storage area is a readable state comprises:

determining that a quantity of written local write rewind times in the fourth storage area is greater than or equal to a sum of a quantity of occupied local read rewind times in the third storage area and a target increment, wherein

the quantity of written local write rewind times in the fourth storage area is determined based on a second write pointer of the fourth storage area, and the second write pointer of the fourth storage area is obtained when a current data write mode is a second mode; and

the quantity of occupied local read rewind times in the third storage area is determined based on the first read pointer of the third storage area, and the target increment value is determined based on a location of the third storage area.

13. The method according to claim 12, wherein the method further comprises:

performing a MAX operation on the fourth storage area, to set a quantity of occupied local read rewind times in the fourth storage area to the quantity of written local write rewind times in the fourth storage area.

14. A data writing apparatus, disposed in an electronic device, wherein the apparatus comprises:

a determining module, configured to determine first data to be written into a circular storage queue;

a first obtaining module, configured to obtain a global write pointer of the circular storage queue, wherein the circular storage queue comprises a plurality of storage areas, each storage area comprises a plurality of subareas, and the global write pointer points to a first storage area of the plurality of storage areas;

a second obtaining module, configured to obtain a first write pointer of the first storage area, and determine a size of allocated space in the first storage area based on the first write pointer of the first storage area;

an allocation module, configured to: if it is determined that the size of the allocated space in the first storage area is less than a size of space of the first storage area, perform an FAA operation on the first storage area, to allocate a first subarea in the first storage area; and

a writing module, configured to write the first data into the first subarea.

15. A data reading apparatus, disposed in an electronic device, wherein the apparatus comprises:

a third obtaining module, configured to obtain a global read pointer of a circular storage queue that stores to-be-read data, wherein the circular storage queue comprises a plurality of storage areas, each storage area comprises a plurality of subareas, and the global read pointer points to a third storage area of the plurality of storage areas;

a fourth obtaining module, configured to obtain a first write pointer and a second write pointer of the third storage area, determine a size of allocated space in the third storage area based on the first write pointer of the third storage area, and determine a size of written space in the third storage area based on the second write pointer of the third storage area;

an occupying module, configured to: if it is determined that the size of the written space in the third storage area is equal to the size of the allocated space in the third storage area, perform a MAX operation on the third storage area, to occupy a second subarea in the third storage area; and

a reading module, configured to read second data stored in the second subarea.

16. An electronic device, comprising:

a memory, configured to store instructions for execution by one or more processors of the electronic device; and

the processor, wherein when the processor executes the instructions in the memory, the electronic device is enabled to perform the data writing method according to any one of claims 1 to 5 or the data reading method according to any one of claims 6 to 13.

17. A computer-readable storage medium, wherein the computer-readable storage medium stores instructions, and when the instructions are executed on a computer, the computer is enabled to perform the data writing method according to any one of claims 1 to 5 or the data reading method according to any one of claims 6 to 13.

FIG. 1

FIG. 2

FIG. 3

FIG. 4a

FIG. 4b

Local variable core 2    cons_tail                prod_head prod_next

Local variable core 1    cons_tail                prod_head prod_next

410        420

obj1    obj2    obj3

cons_head
cons_tail               prod_tail prod_head

FIG. 4c

Local variable core 2    cons_tail                prod_head prod_next

Local variable core 1    cons_tail                prod_head prod_next

410        420

obj1    obj2    obj3    obj4    obj5

cons_head
cons_tail               prod_tail        prod_head

FIG. 4d

Local variable core 2    cons_tail    prod_head prod_next

Local variable core 1    cons_tail    prod_head prod_next

| | | obj1 | obj2 | obj3 | obj4 | obj5 | |

Global metadata

cons_head
cons_tail

prod_tail prod_head

FIG. 4e

| | |
|---|---|
| An electronic device determines first data to be written into a circular storage queue | S501 |
| The electronic device obtains a global write pointer of the circular storage queue, where the global write pointer points to a storage area 610 in the circular storage queue | S502 |
| The electronic device obtains a first write pointer of the storage area 610, and determines a size of allocated space in the storage area 610 based on the first write pointer of the storage area 610 | S503 |
| If the electronic device determines that the size of the allocated space in the storage area 610 is less than a size of space of the storage area 610, the electronic device performs an FAA operation on the storage area 610, to allocate a first subarea in the storage area 610 | S504 |
| The electronic device writes the first data into the first subarea | S505 |

FIG. 5

FIG. 6

Determine first data to be written into a circular storage queue ⟶ S701

Obtain a current global write pointer of the circular storage queue, where the current global write pointer points to a current storage area ⟶ S702

Obtain a first write pointer of the current storage area, and determines a size of allocated space in the current storage area based on the first write pointer of the current storage area ⟶ S703

Determine whether the size of the allocated space in the current storage area is less than a size of space of the current storage area ⟶ S704

Yes →

Perform an FAA operation on the current storage area, to allocate a first subarea in the current storage area ⟶ S705

Re-determine whether the size of the allocated space in the current storage area before the FAA operation is performed is less than the size of the space of the current storage area ⟶ S706

No →

No ↓

Yes ↓

Write the first data into the first subarea ⟶ S707

TO
FIG. 7B

FIG. 7A

CONT.
FROM
FIG. 7A

S708

Determine
whether a next storage area is in an
unallocated state

Yes → Update the current global write pointer, so that
the updated current global write pointer points
to the next storage area — S711

No

S709

Determine
whether data written in the
next storage area in a previous
round is completely
read

Yes

No

S710

Determine
whether writing in the next
storage area in a previous
round is completed

Yes

No

End — S712

FIG. 7B

| Configuration information (buffer config) |
|---|
| Global write pointer (widx) |
| Global read pointer (ridx) |

— 800

| First write pointer (allocated) |
|---|
| Second write pointer (committed) |
| First read pointer (occupied) |
| Second read pointer (consumed) |
| 811 |
| 812 |
| 813 |

814

Global read pointer

— 810

| First write pointer (allocated) |
|---|
| Second write pointer (committed) |
| First read pointer (occupied) |
| Second read pointer (consumed) |
| 821 |
| 822 |
| 823 |

824

Global write pointer

— 820

| First write pointer (allocated) |
|---|
| Second write pointer (committed) |
| First read pointer (occupied) |
| Second read pointer (consumed) |
| 831 |
| 832 |
| 833 |

834

— 830

FIG. 8

An electronic device obtains a global read pointer of a circular storage queue that stores to-be-read data, where the global read pointer points to a storage area 810 in the circular storage queue $\quad\sim$ S901

↓

The electronic device obtains a first write pointer and a second write pointer of the storage area 810, determines a size of allocated space of the storage area 810 based on the first write pointer of the storage area 810, and determines a size of written space of the storage area 810 based on the second write pointer of the storage area 810 $\quad\sim$ S902

↓

If the electronic device determines that the size of the written space in the storage area 810 is equal to the size of the allocated space in the storage area 810, the electronic device performs a MAX operation on the storage area 810, to occupy a second subarea in the storage area 810 $\quad\sim$ S903

↓

The electronic device reads second data stored in the second subarea $\quad\sim$ S904

FIG. 9

```
┌─────────────────────────────────┐
│ Obtain a current global read    │
│ pointer of a circular storage   │ ⟜ S1001
│ queue that stores to-be-read    │
│ data, where the current global  │
│ read pointer points to a        │
│ current storage area            │
└─────────────────────────────────┘
              │
              ▼
┌─────────────────────────────────┐
│ Obtain a first write pointer    │
│ and a second write pointer of   │
│ the current storage area,       │
│ determine a size of allocated   │
│ space in the current storage    │ ⟜ S1002
│ area based on the first write   │
│ pointer of the current storage  │
│ area, and determine a size of   │
│ written space in the current    │
│ storage area based on the       │
│ second write pointer of the     │
│ current storage area            │
└─────────────────────────────────┘
              │
              ▼
          ◇ S1003
    Determine whether the size
    of the written space in the        No
    current storage area is equal ───────────────►  TO FIG. 10B
    to the size of the allocated
    space in the current storage
    area
              │ Yes
              ▼
┌─────────────────────────────────┐
│ Obtain a first read pointer of  │
│ the current storage area, and   │ ⟜ S1004
│ determine a size of occupied    │
│ space in the current storage    │
│ area based on the first read    │
│ pointer of the current storage  │
│ area                            │
└─────────────────────────────────┘
              │
              ▼
            TO
          FIG. 10B
```

FIG. 10A

Determine whether the size of the occupied space in the current storage area is less than the size of the written space in the current storage area — S1005

Yes

No

Determine whether the size of the occupied space in the current storage area is equal to a size of space of the current storage area — S1008

No

Yes

Perform a MAX operation on the current storage area, to occupy a second subarea in the current storage area — S1006

Read second data stored in the second subarea — S1007

Determine whether a new round of data has been written into a next storage area — S1009

No

Yes

Determine whether at least one new round of data has been written into a next storage area — S1010

No

Yes

Update the current global read pointer, so that the updated current global read pointer points to the next storage area — S1011

End — S1012

FIG. 10B

EP 4 538 882 A1

FIG. 11a

FIG. 11b

FIG. 11c

FIG. 12

FIG. 13

FIG. 14

1500

Processor
1501

1506

Coprocessor
1502

Controller hub
1503

Memory
1504

I/O
1505

NIC
1506

FIG. 15

1600

Coprocessor
1620

Processor 1610

Bus controller unit
1690

SRAM unit
1630

Interconnection unit 1650

System agent unit
1680

Integrated memory
controller unit 1640

DMA unit
1660

FIG. 16

## INTERNATIONAL SEARCH REPORT

| | International application No. |
|---|---|
| | **PCT/CN2023/094808** |

### A. CLASSIFICATION OF SUBJECT MATTER

G06F9/50(2006.01)i

According to International Patent Classification (IPC) or to both national classification and IPC

### B. FIELDS SEARCHED

Minimum documentation searched (classification system followed by classification symbols)

IPC: G06F9/-

Documentation searched other than minimum documentation to the extent that such documents are included in the fields searched

Electronic data base consulted during the international search (name of data base and, where practicable, search terms used)

CNABS; CNTXT; CNKI; TWABS; DWPI; VEN; USTXT; WOTXT; EPTXT; IEEE; 百度, BAIDU: 数据, 循环, 环形, 存储, 读, 写, 指针, 标识, 空间, 确认, data, circular, ring, storage, read, write, pointer, identity, space, commit

### C. DOCUMENTS CONSIDERED TO BE RELEVANT

| Category* | Citation of document, with indication, where appropriate, of the relevant passages | Relevant to claim No. |
|---|---|---|
| PY | CN 115934023 A (HUAWEI TECHNOLOGIES CO., LTD.) 07 April 2023 (2023-04-07) description, paragraphs 53-161, and figures 1-11 | 6-13, 15-17 |
| PY | WO 2023029937 A1 (HUAWEI TECHNOLOGIES CO., LTD.) 09 March 2023 (2023-03-09) description, page 7, line 10 to page 21, line 1, and figures 1-11 | 6-13, 15-17 |
| Y | US 2002078317 A1 (MATSUSHITA ELECTRIC INDUSTRIAL CO., LTD.) 20 June 2002 (2002-06-20) description, paragraphs 27-44, and figures 3-4(h) | 1-17 |
| Y | US 2013067160 A1 (MICROSOFT CORP.) 14 March 2013 (2013-03-14) description, paragraphs 27-45, and figures 6-7 | 1-5, 14, 16-17 |
| Y | US 2016070535 A1 (TRAVELPORT, LP) 10 March 2016 (2016-03-10) description, paragraphs 11-44, and figures 1-6C | 1-5, 14, 16-17 |
| Y | US 2008270744 A1 (HASHIMOTO, Y.) 30 October 2008 (2008-10-30) description, paragraphs 11-17, and figure 2 | 1-17 |
| A | US 5548728 A (CANON INFORMATION SYSTEMS, INC.) 20 August 1996 (1996-08-20) entire document | 1-17 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **18 July 2023** | **27 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" align="center"><strong>INTERNATIONAL SEARCH REPORT</strong><br>Information on patent family members</td><td colspan="2">International application No.<br><strong>PCT/CN2023/094808</strong></td></tr>
</table>

| Patent document cited in search report | | | Publication date (day/month/year) | Patent family member(s) | | | Publication date (day/month/year) |
|---|---|---|---|---|---|---|---|
| CN | 115934023 | A | 07 April 2023 | None | | | |
| WO | 2023029937 | A1 | 09 March 2023 | None | | | |
| US | 2002078317 | A1 | 20 June 2002 | JP | 2002259115 | A | 13 September 2002 |
| US | 2013067160 | A1 | 14 March 2013 | US | 8806168 | B2 | 12 August 2014 |
| US | 2016070535 | A1 | 10 March 2016 | WO | 2014201408 | A1 | 18 December 2014 |
| | | | | US | 10013235 | B2 | 03 July 2018 |
| | | | | GB | 201421649 | D0 | 21 January 2015 |
| | | | | GB | 2517361 | A | 18 February 2015 |
| | | | | GB | 2517361 | B | 13 January 2016 |
| US | 2008270744 | A1 | 30 October 2008 | JP | 2008293484 | A | 04 December 2008 |
| US | 5548728 | A | 20 August 1996 | JPH | 08227402 | A | 03 September 1996 |
| | | | | DE | 69520819 | D1 | 07 June 2001 |
| | | | | DE | 69520819 | T2 | 25 October 2001 |
| | | | | EP | 0710906 | A1 | 08 May 1996 |
| | | | | EP | 0710906 | B1 | 02 May 2001 |

Form PCT/ISA/210 (patent family annex) (July 2022)

45

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210806780